(19)

Europäisches
Patentamt

European
Patent Office

Office européen
des brevets

(11) **EP 4 220 581 B1**

(12) **EUROPEAN PATENT SPECIFICATION**

(45) Date of publication and mention
of the grant of the patent:
**08.04.2026 Bulletin 2026/15**

(21) Application number: **22154067.7**

(22) Date of filing: **28.01.2022**

(51) International Patent Classification (IPC):
*G06V 20/56* (2022.01)     *G06V 10/77* (2022.01)

(52) Cooperative Patent Classification (CPC):
**G06V 20/56; G06V 10/7715**

(54) **ESTIMATION OF RISK EXPOSURE FOR AUTONOMOUS VEHICLES**

SCHÄTZUNG DER RISIKOEXPOSITION FÜR AUTONOME FAHRZEUGE

ESTIMATION DE L'EXPOSITION AU RISQUE POUR VÉHICULES AUTONOMES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.08.2023 Bulletin 2023/31**

(73) Proprietor: **Zenseact AB
417 56 Gothenburg (SE)**

(72) Inventors:
• **GYLLENHAMMAR, Magnus
435 43 Pixbo (SE)**
• **ZANDÉN, Carl
437 38 Lindome (SE)**
• **KHORSAND VAKILZADEH, Majid
431 66 Mölndal (SE)**

(74) Representative: **Zacco Sweden AB
P.O. Box 5581
Löjtnantsgatan 21
114 85 Stockholm (SE)**

(56) References cited:
**US-A1- 2020 193 234     US-A1- 2020 346 643**

• **CHIA WEI MING DAN ET AL: "Risk Assessment
Methodologies for Autonomous Driving: A
Survey", vol. 1, 1 January 2022 (2022-01-01),
Piscataway, NJ, USA, pages 1 - 17, XP055940064,
ISSN: 1524-9050, Retrieved from the Internet
<URL:https://ieeexplore.ieee.org/stampPDF/
getPDF.jsp?tp=&arnumber=9756641> [retrieved
on 20220708], DOI: 10.1109/TITS.2022.3163747**

## Description

TECHNICAL FIELD

The present invention relates to automated driving systems, and in particular to risk estimation for vehicles equipped with an automated driving system.

BACKGROUND

During these last few years, the development of autonomous vehicles has exploded and many different solutions are being explored. An increasing number of modern vehicles have advanced driver-assistance systems (ADAS) to increase vehicle safety and more generally road safety. ADAS - which for instance may be represented by adaptive cruise control, ACC, collision avoidance system, forward collision warning, etc. - are electronic systems that may aid a vehicle driver while driving. Today, development is ongoing in both ADAS as well as Autonomous Driving (AD), within a number of different technical areas within these fields. ADAS and AD will herein be referred to under the common term Automated Driving System (ADS) corresponding to all of the different levels of automation as for example defined by the SAE J3016 levels (0 - 5) of driving automation.

Accordingly, in a not too distant future, ADS solutions will to a greater extent find their way into modern vehicles. An ADS may be construed as a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles and/or relevant signage.

ADS features as described above are, however, bound to be required to function with a high integrity to provide sufficiently low risk for the vehicle occupant(s) as well as their surrounding environments. Ensuring that the risk is sufficiently low may require intractable amounts of data for statistical proofs, and would, according to an example, take e.g. approximately a hundred vehicles to drive continuously for five centuries, to acquire. There are several approaches to minimize the risk of the ADS features before they are launched onto public roads. However, on top of this, it is generally believed that the ADS features should be monitored once in the field, in order to ensure that they adhere to required safety levels.

Moreover, in many cases the safety risks that the ADS will face are from situations that are not within the limits of traffic rules or even conventional driving scenarios, but rather what is called corner cases or edge cases. These cases could include VRUs (vulnerable road users) appearing either on the perception boarder or from an occluded state around the ADS. Other cases include very aggressive driving from nearby traffic participants or adverse weather or road conditions.

Accordingly, assuring the safety of an ADS is one of the central challenges in being able to release autonomous vehicles to the market. Safety can be viewed as the absence of risk and this is also one of the most tractable ways of viewing it. One of the largest challenges with ADS is to ensure that the ADS upholds the agreed safety levels or risk levels of the system when the controlling the vehicle, such as e.g. during planning and execution of paths and/or trajectories.

In general, a conventional path planning system generates a target path for an autonomous vehicle from a given drivable area that is typically provided based on data from a perception system. The target path is assumed to be sent to a vehicle controller that computes steering angles and acceleration such that the vehicle follows the path.

There is therefore a need in the art for new methods and systems that improve the capability for ADS-equipped vehicles to take more performant actions and decisions during run-time, while ensuring the safety of the vehicle occupants and other road users.

US 2020/346643 A1 discloses an operational risk assessment for autonomous vehicle control. In more detail, changes in the controlling of an autonomous vehicle are caused based on an operational risk determined for the autonomous vehicle. An operational risk monitor module of the autonomous vehicle uses information about objects detected within an environment in which the autonomous vehicle is located and predicted behaviours of those objects to assess the operational risk of the autonomous vehicle along a planned path. The operational risk is used to determine whether to cause a change in the controlling of the autonomous vehicle, for example, based on a comparison between the operational risk and a previously estimated operational risk or based on a determination that the operational risk exceeds a threshold. The operational risk monitor module transmits a signal to one or more control system modules of the autonomous vehicle to indicate to change the controlling of the autonomous vehicle based on the operational risk.

SUMMARY

It is therefore an object of the present invention to provide a solution for estimating a risk exposure of a vehicle equipped with an automated driving system (ADS) during run-time that alleviates all or at least some of the drawbacks of presently known solutions.

In particular it is an object of the invention to provide a solution for estimating a risk exposure of an ADS-equipped vehicle in terms of second order risks, during run time.

This object is achieved by means of a computer-implemented method, a computer-readable storage medium, a processing system, a remote server, and a cloud environment, as defined in the appended independent claims. The term exemplary is in the present context to be understood as serving as an instance, example or illustration.

According to a first aspect of the present invention, there is provided a computer-implemented method for estimating a risk exposure of a remote vehicle equipped with an automated driving system (ADS). The method comprises obtaining input data comprising:

- At least one candidate state of the remote vehicle, wherein each candidate state comprises a set of candidate state parameters of the remote vehicle.
- At least one predicted scene of the surrounding environment of the remote vehicle at each candidate state, wherein each predicted scene comprises a set of scene parameters of the surrounding environment of the remote vehicle and a scene probability metric of the scene occurring at an associated candidate state.
- At least one event for each predicted scene, wherein each event comprises an event probability metric of the event occurring in the predicted scene and a set of event parameters of each event.

The method further comprises processing the obtained input data using a trained machine learning algorithm configured to evaluate the at least one candidate state by generating an output indicating that candidate state as a high-risk state for the remote vehicle for each candidate state that is associated with at least one predefined incident occurring with a probability exceeding a predefined allowable frequency of occurrence for that incident during a predicted temporal development of each event. The trained machine learning algorithm configured to evaluate the at least one candidate state by generating an output indicating that candidate state as an acceptable-risk state for the remote vehicle for each candidate state that is associated with at least one predefined incident occurring with a probability below the predefined allowable frequency of occurrence for that incident during a predicted temporal development of each event. Further, the method comprises determining a path to be executed by the remote vehicle based on the evaluated at least one candidate state, where the determination of a path to be executed by the remote vehicle comprises rejecting any candidate path comprising a candidate state that is determined as a high-risk state for the vehicle.

According to a second aspect of the present invention, there is provided a (non-transitory) computer-readable storage medium storing one or more programs configured to be executed by one or more processors of an in-vehicle processing system, the one or more programs comprising instructions for performing the method according to any one of the embodiments disclosed herein. With this aspect of the invention, similar advantages and preferred features are present as in the previously discussed first aspect of the invention.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect of the present invention, there is provided a processing system comprising control circuitry configured to obtain input data comprising:

- At least one of candidate state of the remote vehicle, wherein each candidate state comprises a set of candidate state parameters of the remote vehicle.
- At least one predicted scene of the surrounding environment of the remote vehicle at each candidate state, wherein each predicted scene comprises a set of scene parameters of the surrounding environment of the remote vehicle and a scene probability metric of the scene occurring at an associated candidate state.
- At least one event for each predicted scene, wherein each event comprises an event probability metric of the event occurring in the predicted scene and a set of event parameters of each event.

The control circuitry is further configured to process the obtained input data using a trained machine learning algorithm configured to evaluate the at least one candidate state by generating an output indicating that candidate state as a high-risk state for the remote vehicle for each candidate state that is associated with at least one predefined incident occurring with a probability exceeding a predefined allowable frequency of occurrence for that incident during a predicted temporal development of each event. The trained machine learning algorithm configured to evaluate the at least one candidate state by generating an output indicating that candidate state as an acceptable-risk state for the remote vehicle for each candidate state that is associated with at least one predefined incident occurring with a probability below the predefined allowable frequency of occurrence for that incident during a predicted temporal development of each event. Further, the control circuitry is configured to determine a path to be executed by the remote vehicle based on the evaluated at least one candidate state, where the determination of a path to be executed by the remote vehicle comprises rejecting any candidate path comprising a candidate state that is determined as a high-risk state for the vehicle. With this aspect of the invention, similar advantages and preferred features are present as in the previously discussed first aspect of the invention.

According to a fourth aspect of the present invention, there is provided a remote server comprising the processing system according to any one of the embodiments disclosed herein. With this aspect of the invention, similar advantages and preferred features are present as in the previously discussed first aspect of the invention.

According to a fifth aspect of the present invention, there is provided a cloud environment comprising one or more remote servers according to any one of the embodiments disclosed herein. With this aspect of the invention, similar advantages and preferred features are present as in the previously discussed first aspect of the invention.

Further embodiments of the invention are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

BRIEF DESCRIPTION OF THE DRAWINGS

Fig. 1 is a schematic flow chart representation of a computer-implemented method for estimating a risk exposure of a remote vehicle equipped with an automated driving system (ADS) in accordance with some embodiments.

Fig. 2 is a schematic flow chart representation of a computer-implemented method for estimating a risk exposure of a remote vehicle equipped with an automated driving system (ADS) in accordance with some embodiments.

Fig. 3 is a schematic top-view illustration of a vehicle on a road portion illustrating an example effect on a path planning module in accordance with some embodiments.

Figs. 4a - 4c are schematic top-view illustrations of a vehicle on a road portion in some example scenarios in accordance with some embodiments.

Fig. 4d is a schematic top-view illustration of a vehicle on a road portion illustrating an example scene that is simulated in a virtual test environment.

Fig. 5 is a schematic block diagram representation of a confidence estimation process for the output generated by the trained machine learning algorithm in accordance with some embodiments.

Fig. 6 is a schematic block diagram representation of a processing system for estimating a risk exposure of a remote vehicle equipped with an automated driving system (ADS) in accordance with some embodiments.

Fig. 7 is a schematic top view illustration of a risk map with some of the different components contributing to the risk map in accordance with some embodiments.

Fig. 8 is a schematic block diagram representation of a simulation system for estimating a risk exposure of a vehicle equipped with an automated driving system (ADS) in a virtual test environment.

Fig. 9 is a schematic block diagram representation of a manifold calculator depicting the different iteration levels of the simulation.

Fig. 10 is a schematic block diagram representation of an architecture for training the machine learning algorithm configured to evaluate candidate states in accordance with some embodiments.

DETAILED DESCRIPTION

In the following detailed description, embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), Field Programmable Gate Arrays (FPGA) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

**OVERVIEW**

As mentioned in the foregoing, assuring safety of automated driving systems (ADSs) is one of the central challenges in being able to release such systems to the market. Since the approach of statistical brute force validation is generally considered to be infeasible, there is a need for more refined methods. Other alternatives include formal methods, where the ADS is proven to be safe given certain sets of assumptions about its operational environment. For example, there have been some attempts to mitigate this problem by for example providing a method for computing invariably safe states for motion planning of autonomous vehicles, but in general such solutions do so under the assumptions of rule-behaving traffic and without additional uncertainties.

However, in many cases the potential safety risks that an ADS will face are from situations that are not within the frameworks defined by common traffic rules or even within the frameworks defined by conventional driving scenarios, but rather what is called corner cases or edge cases. These cases could include vulnerable road users (VRUs) appearing either on the perception border (i.e. at the periphery of the capabilities of the ADS's perception system) or from an occluded state that the ADS cannot perceive. Other such cases include very aggressive driving or unexpected/irrational driving manoeuvres from nearby traffic participants or adverse weather/road conditions.

Thus, in order to better estimate the risk exposure of the ADS, one should account for the risks associated with the currently perceived and predicted states of both the own vehicle (i.e. ego-vehicle) as well as the currently perceived and predicted states of surrounding objects (e.g. other vehicles). Further, it is herein proposed that the risk associated with the presence of perceived objects making unexpected/irrational decisions and with the prediction of presence of (currently) non-perceived objects is included together with the estimated and predicted capabilities of the ego-vehicle's ADS.

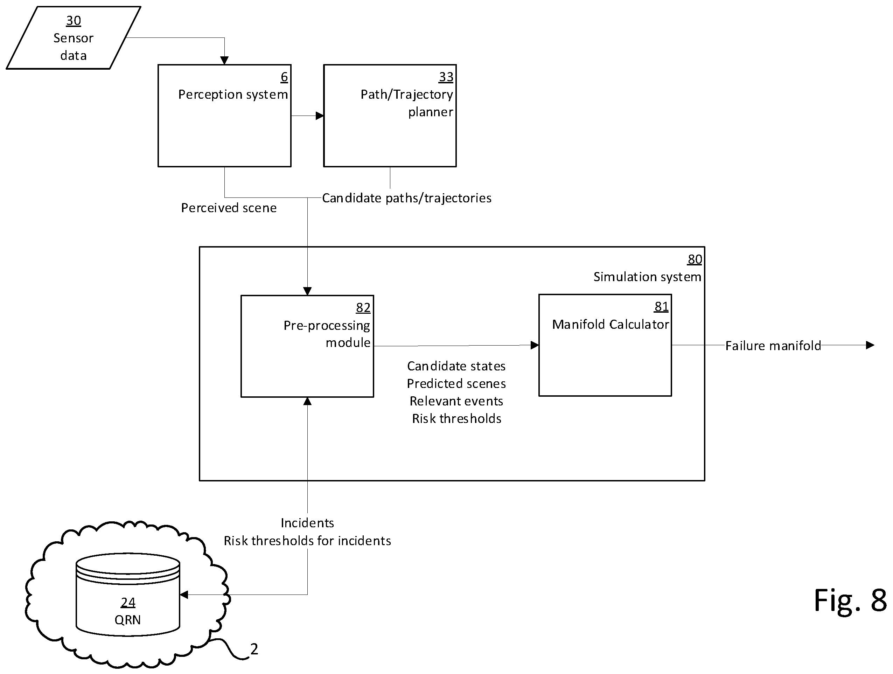

These metrics may for example be estimated by constructing a "risk map" of the surrounding environment of the ADS-equipped vehicle. In the present context, a risk map estimates and quantifies a view of the "risk" across the ADS's surrounding (i.e. of the ego-vehicle's surroundings), and preferably includes sensor capabilities, uncertainties in detections and predictions as well as uncertainties in the available capabilities of the vehicle platform (e.g. braking capability, steering capability, capability of the ADS, and so forth). In more detail, the risk estimate that is obtained from the risk map is not dependent on any intermediary threat measure or similar (such as e.g. Brake Threat Number). Instead it may be understood as a direct estimate of the risk based on a number of models underpinning the worldview of the ADS (the "worldview" of the ADS may be understood as the perceived reality of the ADS using sensor data, map data, etc.), as well as on an estimate of the ADS's own capabilities. Further, this approach provides a continuous measure between no risk and crash as opposed to other existing methods to evaluate the performance of automated/autonomous vehicles, which are of more binary nature. Further details regarding the risk map are provided in reference to Fig. 8 below.

Moreover, the present inventors realized that in order to further improve the estimation of the risk exposure of an ADS, one must account for the "second order risk", i.e. the risk which an adverse event imposes on the ADS-equipped vehicle while accounting for the ADS's capability of avoiding an incident (e.g. near-collision or collision) should the adverse event take place.

In the present context, these "second order risks" may for example occur during events where there is a risk of an incident (e.g. collision) with an object that is "perceived" by the ADS of the vehicle but which makes a rare or an unexpectedly aggressive action, or where there is a risk of an incident with "non-perceived objects". In the present context, "non-perceived objects" may for example be objects that are occluded or outside of the limit of the field of view of the ADS's perception capabilities. The term "incident" as used herein refers to a collision (of different severity levels as given by an applicable standard or equivalent agreement) or a near-collision (i.e. the ADS managed to avoid a collision but violated one or more predefined safety margins or safety thresholds).

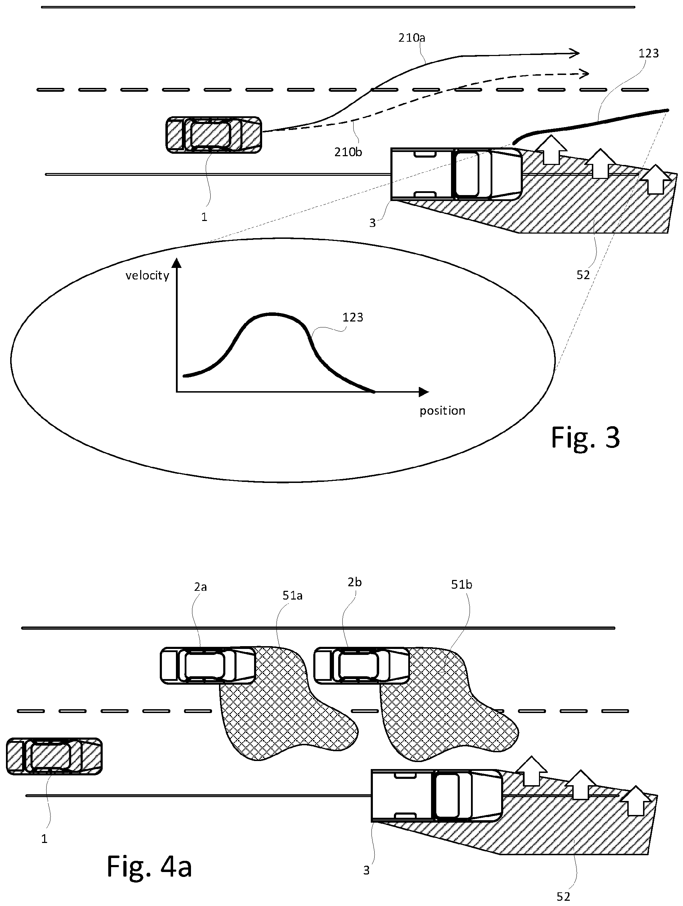

Fig. 4a is a schematic top-view illustration of a vehicle 1 traveling on a road portion, depicting these two types of "events". In more detail, the ego-vehicle 1 is traveling behind two other vehicles 2a and 2b, where the shaded areas 51a, 51b schematically illustrate the potential actions that are used to estimate the second order risk. Moreover, there is a stationary vehicle 3 situated on the road shoulder or edge of the road portion, where the occluded area 52 in front of the stationary vehicle 3 may lead to the other event where non-perceived objects may appear. In other words, Fig. 4a illustrates two types of events that are considered for second order risks - one event that is associated with objects that are perceived by the ADS, and another event associated with risks related to occlusions or on the perception limits of the ADS.

A "second order risk" for the above-mentioned first example event/situation (perceived object making unexpected actions) may in the present context be understood as: Given a certain relative position to a perceived object - what is the probability of a certain incident (i.e. failure) associated with a certain set of actions from the perceived object(s) and their respective probabilities as well as the response of the ADS to each of these situations.

Therefore, by accounting for the interaction between the ADS and the potentially hazardous object, and furthermore, by including the capability of the ADS to make "correct" decisions so to avoid any incidents with the potentially hazardous object, a more accurate estimation of the ADS's risk exposure in various scenarios can be provided. Consequently, it is possible to deduce which states (e.g. positions, headings, speeds, etc.) of the ADS-equipped vehicle that can be considered "high-risk" or "acceptable-risk" for any relevant event. With this knowledge, it is then possible to train a machine learning algorithm (e.g. a suitable artificial neural network) that is able to evaluate these states in run-time.

In other words, by means of the embodiments of the invention described herein, an enhanced estimate of the risk exposure of ADS-equipped vehicles is achievable in run-time (i.e. while the vehicle is operating in traffic). In more detail, the utilized machine learning algorithm may be trained by utilizing an elaborate simulation system where the viable/possible/wanted states of the ADS as well as the models of each applicable event are considered as will be further elaborated upon below. The computer-implemented method and processing system as proposed herein further improve the performance of the ADS in different situations and may for example be utilised to improve the operational reliability in terms of safety and/or as a means to reduce unnecessary safety margins during run-time path planning. In reference to the latter, a more comfortable autonomous driving experience is readily achievable. In particular, the herein proposed solution provides an enhanced estimate of the set of states that the decision-making module/component of the ADS should avoid in order to uphold the agreed safety/risk level of the ADS.

## RISK MAP

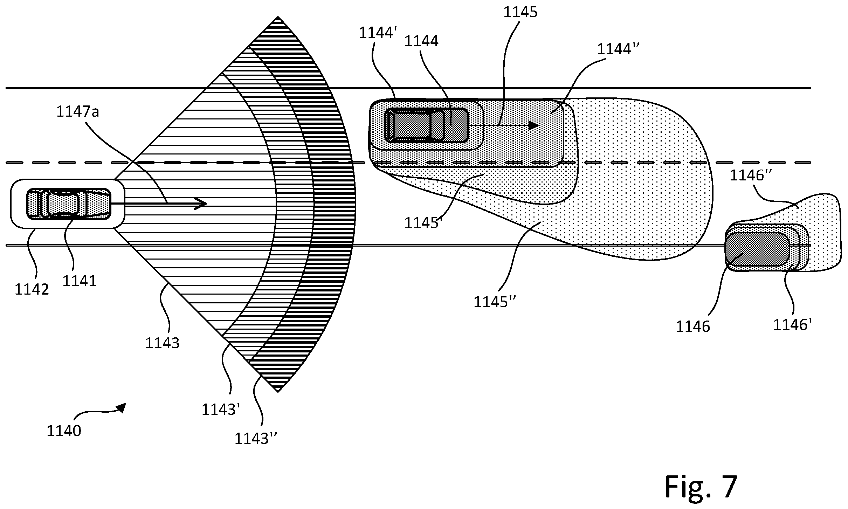

Turning to Fig. 7, there is provided a schematic top view illustration of a risk map 1140 with some example components 1141 - 1146" contributing to the risk map 1140 in accordance with some embodiments of the present invention. Furthermore, a planned path for execution 1147a-c of the ego-vehicle is indicated in the map 1140.

In more detail, the risk map 1140 comprises information indicative of an actuation capability of the vehicle and is exemplified in Fig. 8 as an estimated braking capacity of the vehicle 1143 including uncertainty estimation 1143', 1143" of the same. The actuation capability of the vehicle may for example include one or more actuation parameters such as e.g. braking capacity, maximum steering angle, maximum acceleration capability, etc. and further include an uncertainty estimate for each parameter. The actuation capability and the associated uncertainty estimate(s) may be determined in real-time based on a predefined model given one or more real-time variables such as e.g. a speed of the vehicle, an acceleration of the vehicle, vehicle properties (vehicle dimensions, vehicle weight, etc.), road surface properties, and so forth, as readily understood by the skilled person in the art. The uncertainty estimates may be derived from predefined statistical models associated with each actuation parameters, where the actuation capability is given by the mean or mode value and the uncertainty estimate is given by e.g. one or two standard deviations above or below the mean.

Further, the risk map 1140 comprises a geographical position 1141 of the ego-vehicle in the map (as deduced from a candidate state of the vehicle), the uncertainty estimation 1142 of the geographical position 1141, a position of external objects 1144, 1146, uncertainties of the position of the external objects 1144', 1144", 1146', trajectories 1145 of dynamic objects 1144 and uncertainties 1145' 1145" of the trajectories 1145. The estimated geographical position 1141 of the vehicle and the uncertainty estimates 1142 related thereto are comprised in the candidate state of the ego-vehicle, while the estimates related to the external objects 1144 and uncertainty estimates related thereto are comprised in the predicted scene of the surrounding environment.

The estimated uncertainties may for example be computed based on models (predefined or self-learning/Machine-learning models or algorithms) that define a tolerance or error-margin in the measurements provided from the sensors of a vehicle (e.g. cameras, radar, LiDAR, ultrasonic sensors, etc.). Thereby, the formed risk map 1140 also accounts for uncertainties inherent in such measurements of the vehicle's worldview caused by for example, sensor manufacturing tolerances, noise, and so forth. Accordingly, the whole risk estimation is rendered more accurate and reliable, more accurately reflecting the actual risk exposure of the ADS of the vehicle. The terms "risk exposure of the ADS" and "risk exposure of the vehicle" are herein used interchangeably.

In short, the risk map 1140 provides an exemplary means to evaluate a "candidate state" of the vehicle in accordance with some embodiments. The risk map 1140 may be formed based on an estimated actuation capability/-capabilities (including their uncertainties) and an estimation of the location of free-space areas (including their uncertainties). The free-space areas may for example be derived from sensor data of one or more vehicle-mounted sensors configured to monitor the surrounding environment of the vehicle. Nevertheless, the sensor data may also originate from other sensors in the vicinity of the vehicle, e.g. sensors mounted on other vehicles or on infrastructure elements and obtained via a V2V or V2X communication network.

Free-space areas may in the context of the present disclosure be understood as areas in the surrounding environment of the ego-vehicle absent of objects (e.g. other vehicles, pedestrians, barriers, animals, bicycles, static objects, etc.). Thus, the obtained/determined/estimated location of free-space areas may be understood as estimates of areas absent of external objects (static and dynamic objects) as well as an estimate of the uncertainty of this determination, i.e. the likelihood of the determined location of the free-space area actually being true.

Moreover, in some embodiments, the location of free-space areas comprises a position of external objects located in the surrounding environment of the ego-vehicle. The estimated position of the external objects may include uncertainties of the position of the external objects, estimated trajectories of any dynamic objects of the external objects and uncertainties of the estimated trajectories of the dynamic objects. However, in some embodiments the location of free-space areas is determined by a dedicated module of the vehicle, where the dedicated module is configured to obtain sensor data indicative of the surrounding environment of the vehicle, and to derive the location of the free-space areas with respect to the vehicle based on the sensor data. Thus, there does not have to be an intermediate step or layer where objects are detected before the location of the free-space areas is obtained, i.e. the "free-space area" may be obtained directly. For example, a signal emitted by a Lidar may propagate through space for a certain distance before it is reflected from some surface, then this area between the Lidar and the surface may be defined as a "free-space area" without any operation or step to define the surface that the signal was reflected from.

Further, the risk map 1140 comprises a risk parameter for each of a plurality of area segments comprised in the surrounding environment of the ego-vehicle. The area segments may for example be defined by cells of an overlaid virtual grid (not shown). Thus, one can utilize the ADS's readily available functionality of estimating the "free space" in the surrounding area of the ego-vehicle and the functionality of estimating the operating capabilities of the vehicle platform (both of which are generally used for making decisions and controlling the vehicle), and then use this functionality in order to generate a risk map 1140.

Each risk parameter may for example be indicative of a probability of an accident event or of a probability of violating any predefined safety margin or threshold if the vehicle were to occupy an associated area segment, or more specifically for a candidate state of the vehicle to occupy that area segment. In a simplified example, if a first area segment is completely within an area occupied by an external vehicle, then that first area segment may have a risk parameter indicating that the first area segment is a "high risk" segment. This is at least partly based on the logical reasoning that if the vehicle where to occupy that area segment, one can assume that there is a relatively high probability of collision with the external vehicle. Analogously, if a second area segment is completely within a drivable road segment void of any external objects, then that second area segment may have a risk parameter indicating that the second area segment is a "low risk" segment.

The term "probability of violating a predefined safety margin or threshold" may for example be an estimate of a probability of violating a predefined minimum distance to other vehicles or other objects. Thus, given some statistical model indicative of certain scenarios occurring in the operational design domain (ODD) of the vehicle, one can estimate the probability of an external vehicle performing an unexpected manoeuvre which would cause a violation of the predefined minimum distance to a lead vehicle, and also estimate the probabilities of this specific action taking place on various scenarios. In other words, the risk parameters does not necessarily have to indicate a probability of an accident event, but may be defined on other metrics such as exemplified above. Other examples include other quality metrics such as distance to road edge, magnitude of jerk (e.g. lateral acceleration), and so forth.

In summary, the risk map 1140 is constructed by incorporating the risks associated with the currently perceived and predicted states of both the ego-vehicle 1141 as well as surrounding objects 1144, 1146. Further, the risk associated the presence and prediction of presence of (currently) non-perceived objects are included as well as the estimated and predicted capabilities of the ADS-equipped ego-vehicle.

Thus, the risk map 1140 readily provides an estimate of the probability of the aforementioned events occurring that are associated with the "second order risks", i.e. the probability of an incident with an object that the ADS perceives but which makes a rare or aggressive action and the probability of an incident with non-perceived objects that might be present but occluded or on the limit of the field of view of the ADS. However, the interaction between the ADS and the erratic/unexpected objects are not inherently encoded in the risk map, and it is an object of the present invention to account for this interaction as well in the overall risk estimate. Further details related to the formation and utilization of a "risk map" are provided in European Patent Application No. 20196794.0.

It should be noted that even though the above description in reference to the risk map pertains to a real-time or run-time formation of a risk map, it goes without saying that the risk map may be constructed offline or in "design-time" based on stored sensor data from one or more vehicles. Alternatively, the run-time constructed risk maps may be stored (in a local memory device of the vehicle or a remote memory device accessible by the vehicle). Either way, the stored sensor data or the stored risk maps may then be used offline for the purpose of obtaining the candidate states, predicted scenes and relevant events for performing the simulation methods as discussed in reference to Figs. 8 - 10 herein.

## CLOUD-BASED RUN-TIME ESTIMATION OF RISK EXPOSURE OF AN ADS-EQUIPPED VEHICLE

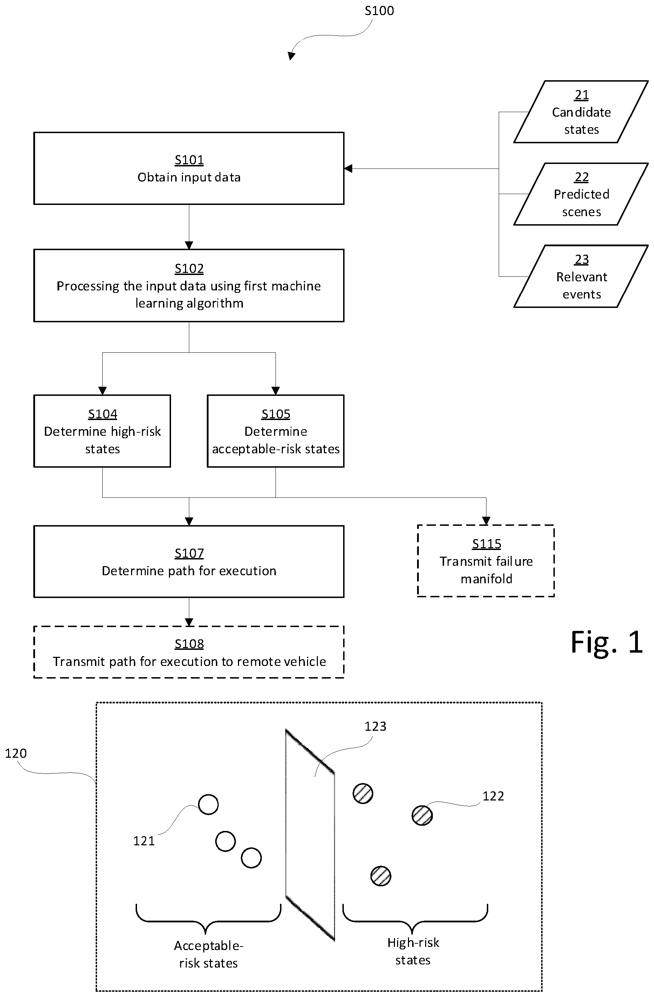

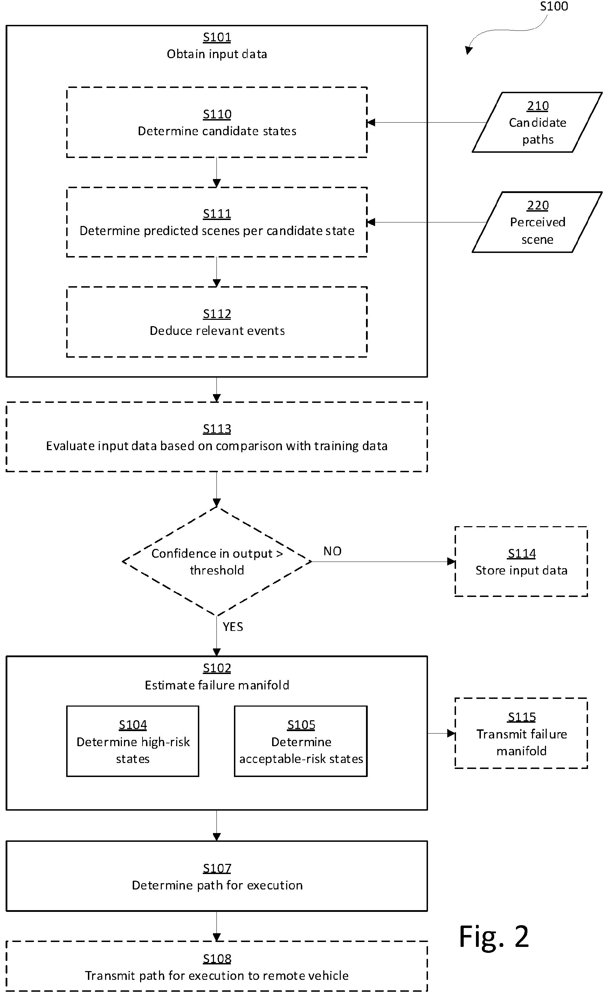

Figs. 1 and 2 are schematic flow chart representations of a computer-implemented method S100 for estimating a risk exposure of a remote vehicle equipped with an automated driving system (ADS) in accordance with some embodiments. The method S100 is preferably performed by a remote (to the vehicle) processing system, such as e.g. a cloud-processing system. Moreover, the method S100 is particularly suitable for estimating the risk exposure of an ADS-equipped vehicle in terms of second order risks in run-time (i.e. while the vehicle is operating in traffic). The method S100 is preferably implemented as one or more programs comprising instructions for performing the method, where the one or more programs are configured to be executed by one or more processors of an in-vehicle processing system. In contrast to Fig. 1, Fig. 2 contains some additional optional steps in accordance with some embodiments which may be included individually or in various combinations. The term "remote" is here in reference to relation between the processing system performing the method and the vehicle whose risk exposure is estimated, meaning that the method S100 is executed by an external processing system relative to the vehicle.

The method S100 comprises obtaining S101 input data comprising one or more candidate states 21 of the remote vehicle, at least one predicted scene 22 of the surrounding environment of the remote vehicle at each candidate state, at least one event 23 for each predicted scene. Generally, "a set" may in the present context to be understood as "one or more". The term obtaining is herein to be interpreted broadly and encompasses receiving, retrieving, collecting, acquiring, deriving, determining, and so forth. The input data may at least partly be obtained S101 from (raw or processed) sensor data generated by the remote vehicle as will be elaborated upon in the following.

In more detail, the candidate states 21 may be understood as potential/achievable/planned states of the remote vehicle, where each candidate states 21 comprises a set of candidate state parameters of the remote vehicle. In other words, the candidate states 21 may be understood as states that are under consideration in a planning stage. The candidate state parameters may include one or more of a geographical position of the remote vehicle, a heading of the remote vehicle, an ADS configuration of the remote vehicle, an actuation capability of the remote vehicle, vehicle dimensions, and a vehicle weight. Moreover, in some embodiments, the candidate states 21 at least implicitly include the first order risks as it can be assumed that the remote vehicle only transmits candidate states 21 with allowable first order risks. The first order risks are the potential risks that are accounted for in the risk map as discussed in the foregoing.

In some embodiments, the ADS configuration of the vehicle comprises information about the capabilities of the ADS, for example capabilities in terms of how the ADS is configured to handle certain traffic scenarios should they occur. In more detail, the ADS configuration may be indicative of the capabilities of the ADS for handling a traffic scenario where a nearby external vehicle unexpectedly cuts-in in front of the ego-vehicle at a distance of 5 meters in front of the ego-vehicle while the ego-vehicle is traveling at a speed of 100 km/h. Here, the ADS may be configured to slow down with a certain deceleration in order to increase the distance to the external vehicle, to switch to a nearby lane, or move to the road shoulder and stop the ego-vehicle, and so forth depending on the specific scenario (which includes positions and predicted actions of other dynamic objects). Similarly, the ADS configuration may be indicative of the capabilities of the ADS for handling a traffic scenario where a moose or deer suddenly jumps out on the road 30 meters in front of the vehicle while the ego-vehicle is traveling at a speed of 80 km/h. Here, the ADS may be configured to initiate an emergency brake manoeuvre, to steer around the moose or deer while decelerating in a controlled manner, to estimate the trajectory of the moose or deer and act accordingly, and so forth depending on the specific scenario (which includes positions and predicted actions of other dynamic objects).

The actuation capability of the vehicle may for example include one or more actuation parameters such as e.g. braking capacity, maximum steering angle, maximum acceleration capability, etc. including an uncertainty estimate for each parameter. The actuation capability may be derived from sensor data may for example be obtained from vehicle-mounted sensors, internal control units, or the like. The actuation capability and the associated uncertainty estimate(s) may be determined based on a predefined model given one or more physical variables such as e.g. current speed, vehicle properties (vehicle dimensions, vehicle weight, etc.), road surface properties, and so forth, as readily understood by the skilled person in the art. The uncertainty estimates may be derived from predefined statistical models associated with each actuation parameters, where the actuation capability is given by the mean or mode value and the uncertainty estimate is given by e.g. one or two standard deviations above or below the mean.

In some embodiments, the candidate state parameters are deduced from a candidate trajectory 210 or candidate path 210 of the vehicle. In more detail, a path planning module of the ADS may output one or more candidate paths 210 or candidate trajectory 210, and the relevant candidate states 21 may be derived from these candidate paths 210 by isolating specific states of the vehicle along the candidate paths 210. An advantage of analysing candidate paths instead of candidate states directly is that it relieves the need for testing candidate states which might anyhow not be relevant (but which might have been included in a set of candidate states due to looser selection conditions). Another advantage of analysing candidate paths instead of candidate states directly the combinatorial factor of possible predicted scenes at each candidate state is reduced, which renders the whole method S100 more computationally efficient. In more detail, with the notion of analysing a candidate trajectory or candidate path instead of a single state, the time evolution of the predicted scene is also connected to the trajectory or path leading up to the candidate state. Conversely, when analysing the states directly, all possible predicted scenes pertaining to any trajectory leading to the state should be considered, even though only one of those trajectories or paths may have been relevant from the ADS's perspective. Thus, even in the case where the same state is reached with two different candidate paths or candidate trajectories this will still lead to less of a computational effort as it will only result in envelop of predictions across each scene corresponding to the two candidate paths.

Furthermore, each predicted scene 22 comprises a set of scene parameters of the surrounding environment of the vehicle and a scene probability metric of the scene occurring at an associated candidate state. The scene probability metric may be given from the compounded probability of various objects being at predicted locations at one or more moments in time defining the timing of the predicted scene. Thus, the probability metric may for example be a percentage defining the likelihood of the predicted scene occurring ranging from 0 % to 100 %. The probabilities of various objects in the surrounding environment of the vehicle being at predicted locations and/or performing predicted actions may for example be obtained from the aforementioned risk map.

In accordance with some embodiments, the set of scene parameters comprises one or more of:

- A predicted location of free-space areas in the surrounding environment of the vehicle and an uncertainty estimation for the predicted location of free-space areas.
- A predicted location of static external objects in the surrounding environment of the vehicle and an uncertainty estimation for the predicted location of the static external objects.

  ○ Static external objects include, but are not limited to, stationary/parked vehicles, buildings, road barriers, landmarks such as traffic lights and traffic signs, trees, and so forth.

- A predicted location of dynamic external objects in the surrounding environment of the vehicle and an uncertainty estimation for the predicted location of the dynamic external objects.

  ○ Dynamic external objects include other vehicles, pedestrians, and any other dynamic object in the perceivable range of the ADS.

- A predicted heading of the dynamic external objects in the surrounding environment of the vehicle and an uncertainty estimation for the predicted heading of the dynamic external objects.
- A set of predicted dynamical state parameters of the dynamic external objects in the surrounding environment of the vehicle and an uncertainty estimation for each predicted dynamical state parameter of the set of predicted dynamical state parameters of the dynamic external objects.

  ○ Dynamical state parameters include, but are not limited to, dimensions of the dynamic external objects, speed of the dynamic external objects, headings of the dynamic external objects, and trajectories of the dynamic external objects.

- A set of environmental conditions in the surrounding environment of the vehicle and an uncertainty estimation for each environmental condition of the set of environmental conditions in the surrounding environment of the vehicle.

  ○ Environmental conditions include, but are not limited to, lighting conditions, precipitation parameters, road friction parameters, and road geometry.

Further, each event 23 comprises an event probability metric of the event occurring in the predicted scene 22 and a set of event parameters of each event 23. In some embodiments, the set of event parameters comprises a perturbation of one or more scene parameters of the set of scene parameters, an uncertainty estimation for the perturbed one or more scene parameter. In some embodiments, the set of event parameters comprises a set of object parameters of a non-perceived external object, where the set of object parameters include a location of the non-perceived external object, a heading of the non-perceived external object, and a speed of the non-perceived external object. In other words, in some embodiments, the set of event parameters define an unexpected/aggressive manoeuvre of a perceived dynamic object and/or an appearance of one or more unseen potential objects and/or risks related to occlusions. As mentioned in the foregoing, the relevant set of events 23 may be derived based on the information encoded in the aforementioned risk map.

In some embodiments, the predicted scenes are determined S111 based on the currently perceived scene 220 of the ADS (i.e. the "worldview" of the ADS at a current state of the ADS), and the obtained candidate states 21. The candidate states 21 may as mentioned be directly received or derived S110 from the candidate paths/trajectories. Thus, the step of obtaining input data S101 may comprise a pre-processing step, where the candidate states 21 are either deduced S110 from the received candidate paths 210 or directly received. These together with the received perceived scene 220 are used to first derive S111 the predicted scenes 22 corresponding to each (derived or received) candidate state 21 and secondly used to derive S112 the relevant events 23. It should be noted that the derivation S111 of the predicted scenes is slightly more straight-forward (i.e. more computationally efficient) using candidate paths/trajectories rather than the candidate states 21 directly as discussed above. The term "candidate path" may be understood as a potential path for the vehicle as generated by a path planning module of the ADS.

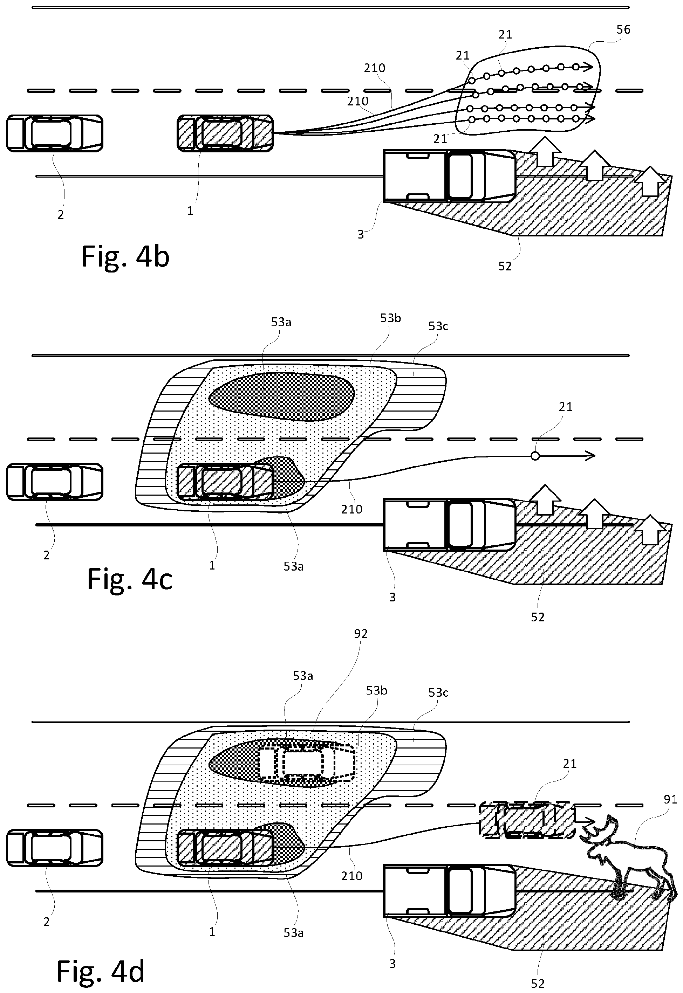

Turning briefly to Fig. 4b, which is a schematic top-view illustration showing how a number of different candidate paths 210 can be used to generate a set of candidate states 21 that are provided as input to the first machine learning algorithm. In the depicted scenario of Fig. 4b, the circled area 56 denotes an area in the scenario that is associated with an "unknown" risk that would be of interest to quantify in order to estimate the second order risk that the ADS-equipped vehicle 1 is exposed to.

Fig. 4c is an example illustration of how a predicted scene for a specific candidate state 21 may be formed. In more detail, the patterned areas 53a, 53b, 53c indicate a probability of occupancy by the external vehicle 2 when the ego-vehicle 1 is in the candidate state 21. In other words, the patterned areas can be construed as a detailing of the predicted scene. Here, the different patterns indicate a different level of probability of occupancy, where the "darker" areas 53a correspond to a higher probability than the "lighter" areas 53c. The middle area 53b correspond to a probability value between the other two 53a, 53c.

Accordingly, the predicted scene is important to include in the input data in order to capture the potential influence from all of the objects in the surrounding environment of the ego-vehicle. For example, the predicted scene depicted in Fig. 4c may take different forms depending of the actions of the ADS during the temporal development of the scene from the ego-vehicle's current position to the candidate state. In the present context the "ego-vehicle" represents the ADS-equipped "remote vehicle" whose risk exposure is estimated.

Further, the method S100 comprises processing S102 the obtained S101 input data using a trained machine learning algorithm (e.g. a trained artificial neural network) that is configured or trained to evaluate the one or more candidate states. In more detail, the trained machine learning algorithm is configured/trained to, for each candidate state that is associated with at least one predefined incident occurring with a probability exceeding a predefined allowable frequency of occurrence for that incident during a predicted temporal development of each event, generate S104 an output indicating that candidate state as a high-risk state for the vehicle. Moreover, the trained machine learning algorithm is configured/trained to, for each candidate state that is associated with at least one predefined incident occurring with a probability below the predefined allowable frequency of occurrence for that incident during a predicted temporal development of each event, generate S105 an output indicating that candidate state as an acceptable-risk state for the vehicle.

In other words, the processing S102 may be construed as a step of evaluating S102 the one or more candidate states by means of a trained machine learning algorithm that is configured determine if the one or more candidate states are associated with at least one predefined incident occurring with a probability exceeding a predefined allowable frequency of occurrence for that incident during a predicted temporal development of each event. Preferably, the machine learning algorithm is an end-to-end trained machine learning algorithm configured to output a signal indicative of the risk associated with each candidate state for the vehicle based on the obtained input data.

Further details and examples related to the training of the machine learning algorithm configured to evaluate the one or more candidate states are provided below in reference to Figs. 8 - 11.

Moving on, the method S100 further comprises determining S107 a path to be executed by the remote vehicle based on the evaluated at least one candidate state. The step of determining S107 the at least one path further comprises rejecting any candidate path comprising a candidate state that is determined as a high-risk state for the vehicle. Moreover, in some embodiments, the step of determining S107 the at least one path to be executed by the vehicle, comprises, for any candidate path associated with a candidate state that is determined as an acceptable-risk state for the vehicle, updating that candidate path to a less conservative path based on a set of quality criteria (may also be referred to as comfort criteria). The quality criteria may comprise one or more thresholds or ranges related to acceleration, deceleration, jerk, and so forth as known in the art. In other words, the acceptable-risk state(s)/path(s) are optimised according to the set of quality criteria

Further, in some embodiments, the method S100 further comprises transmitting S108 the determined S107 path for execution to the remote vehicle. In other words, once the path has been determined S107, a signal is sent S108 to the remote vehicle so that a suitable control system of the remote vehicle causes the remote vehicle to execute the determined S107 path.

In some embodiments, the output from the trained machine learning algorithm is a "failure manifold", which may be understood as a subset of the candidate states that are associated with elevated second order risks and should therefore be avoided by the ADS. Thus, in some embodiments, the machine learning algorithm is configured/trained to output a failure manifold indicative of which candidate states are high-risk states for the vehicle and which candidate states are acceptable-risk states of the one or more candidate states comprised in the input data. In general, a "manifold" is in the present context to be understood in a mathematical context, and may be construed as a collection of points forming a certain kind of set, such as those of a topologically closed surface or an analogue of this in three or more dimensions. In other words, in some embodiments the method S100 does not comprise determining S107 and transmitting S108 path for execution by the remote vehicle, but instead the method S100 may include transmitting S115 data (e.g. a failure manifold) indicative of the determined S104 high-risk states and/or the determined S105 acceptable-risk states. The remote vehicle may accordingly use this as input to its path planning module for determining a path for execution.

The parameters considered by the trained machine learning algorithm in a certain event (of a predicted scene for a candidate state) could be any combination of physical states with associated measures with a defined "direction" (e.g. higher velocity results in increased risk of severe injuries, higher steering wheel angle reduces the available manoeuvrability, etc.). The parameters considered could include position, velocity, acceleration, steering angle, etc. Since these have direction and a physical interpretation it is sufficient to produce a manifold pertaining to the failure region rather than a complete mapping of all relevant states and their associated second order risks, as states on one side of the manifold will have an acceptable level of second order risk whereas the other states will not. This can be illustrated as shown in the dotted box 120 of Fig. 1, which depicts an abstract manifold 123 in a 3D space with the "acceptable states" 121 on one side of the manifold 123 and the "high risk" (unacceptable) states 122 on the other side of the manifold 123.

As mentioned, the output from the trained machine learning algorithm can be used to determine one or more paths to be executed by the vehicle by rejecting "unsafe" candidate paths or by updating candidate paths so to avoid unnecessarily "uncomfortable" manoeuvres, thereby improving passenger comfort while still fulfilling safety requirements. The latter is exemplified in Fig. 3, which is a top-view illustration of an ADS-equipped vehicle 1 located on a road portion with an external vehicle 3 at stand-still that is located in front of the ADS-equipped vehicle 1 causing an occluded area to be formed 52 in front of the stationary vehicle 3. In more detail, Fig. 3 shows how the failure manifold 123 may be used to change a planned candidate path or candidate trajectory generated by the ADS, where 210a depicts the candidate path as output by the ADS before the formation of the failure manifold 123 and 210b depicts the candidate path as output by the ADS after the formation of the failure manifold 123. The states included in the failure manifold 123 here include not only positions but also the velocity of the ADS-equipped vehicle at each point.

Further, in some embodiments, the method S100 comprises, prior to processing S102 the obtained input data using the first trained machine learning algorithm, evaluating S113 the obtained S101 input data by comparing the obtained S101 input data with a dataset used to train the first machine learning algorithm in order to determine a difference measure between the obtained S101 input data and the dataset used to train the first machine learning algorithm. Furthermore, the steps of processing S102 the input data using the first trained machine learning algorithm and determining the candidate path to be executed by the remote vehicle are only performed if the difference measure is below a threshold. However, if the difference metric is above the threshold, the method further comprises storing S114 the obtained input data.

Accordingly, the obtained S101 input data is used to determine the operational validity or confidence level of the trained machine learning algorithm's output by means of the second machine learning algorithm. If the confidence level is associated with an acceptable performance (above a threshold), the trained machine learning algorithm is used to estimate the failure manifold (i.e. to evaluate the one or more candidate states). However, if the confidence level is not acceptable (below a threshold), the obtained S101 input data is instead stored for subsequent use (e.g. to update the machine learning algorithm through offline training).

Since a cloud-based processing system can be provided with access to the entire training data set used for the construction of the machine learning algorithm configured to evaluate the at least one candidate state, a reliable solution for estimating the confidence in the machine learning algorithm's output is readily available. In more detail, the obtained input data can be directly compared with the training data used to configure the machine learning algorithm in order to verify if the machine learning algorithm has been trained with data corresponding to a similar scenario/situation.

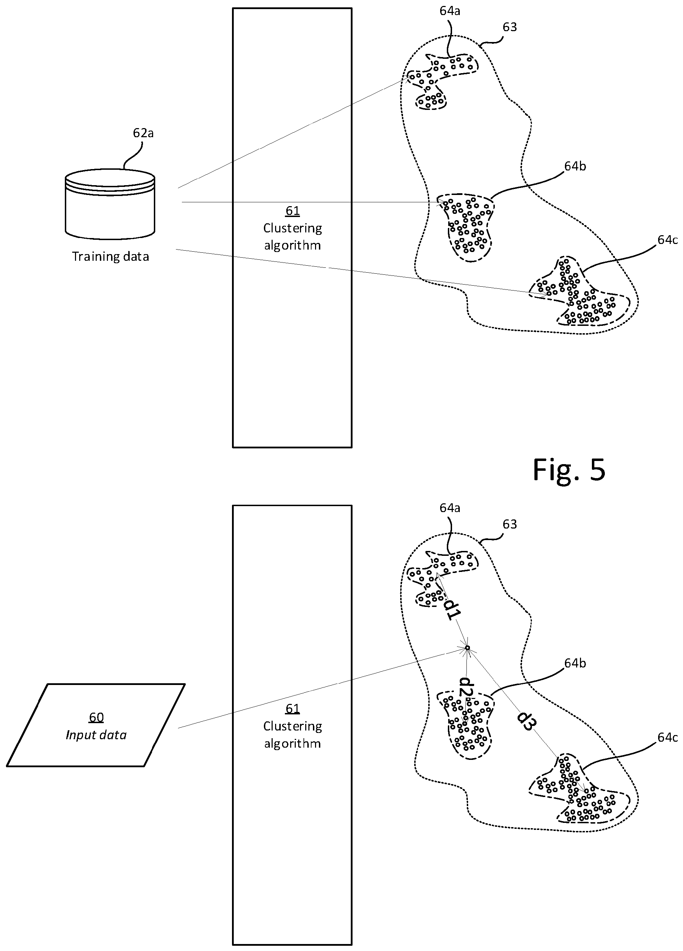

The operational validity (level of confidence) of the output of the trained machine learning algorithm may be determined/estimated/monitored using a confidence estimation system comprising a clustering algorithm. Fig. 5 is a schematic illustration of a confidence estimation system in accordance with some embodiments, where a clustering algorithm 61 is used to encode the training data 62a that has been used to train the machine learning algorithm. In more detail, the top part of Fig. 5 schematically depicts how the clustering algorithm 61 is configured to cluster the training data 62a-c used for training the machine learning algorithm. It should be noted that the number and extension of the training clusters in the parameter space 63 (may also be referred to as a cluster space) are merely an example, and will depend on a specific realization and configuration of the clustering algorithm 61 as readily understood by the skilled person in the art. The clustering algorithm 61 may be any suitable algorithms as readily understood by the skilled person in the art such as e.g., a K-means clustering algorithm, a mean-shift clustering algorithm, a Density-Based Spatial Clustering of Applications with Noise (DBSCAN) clustering algorithm, and so forth.

Once the clustering algorithm 61 has formed the training clusters 64a-c, it can process a new scenario or situation (i.e. the obtained S101 input data) and place it in the same cluster space 63. Then, the difference metric is determined based on a position of the placed input data 60 in the clustering space 63 relative to each training data cluster 64a-c (see bottom part of Fig. 5). Thus, the dataset used to train the first machine learning algorithm defines at least one parameter space 64a-c in a multi-dimensional reference frame 63, and the difference metric comprises a distance measure d1-d3 between the input data and the at least one parameter space in the multi-dimensional reference frame 63. Accordingly, in some embodiments the aforementioned threshold is a distance threshold. In the depicted situation, where there are multiple distances d1-d3, the smallest distance of the distances d1-d3 could be used as the difference metric. The term "distance" as used herein in reference to the confidence estimation could be any measure in the applicable parameter space. Moreover, it should be noted that the use of a clustering algorithm and cluster space in order to evaluate the confidence of the output of the trained machine learning algorithm is an example embodiment. In other embodiments, a Gaussian process may be used to learn how to predict the output error of the trained machine learning algorithm, as readily understood by the skilled reader.

In other words, the distances d1-d3 may be used to determine the validity or confidence of the output of the machine learning algorithm, because if the distance (i.e. difference metric) is above a threshold, it can be concluded that the machine learning algorithm has not been trained for situations contained in the evaluated input data, and consequently, that the confidence in the output from the trained machine learning algorithm would be low using that input data. For example, if the trained machine learning algorithm has not had any "exposure" to snow conditions, and the obtained input data indicates snowy conditions, then it may be concluded that the estimation of the risk exposure as given by the trained machine learning algorithm will not be sufficiently accurate for input data containing a scenario in snowy conditions. In the depicted embodiments, this would be indicated by the comparison between the input data (containing snowy conditions) and the training data in the cluster space 63.

In other words, the step of evaluating the obtained input data may accordingly comprise processing, by means of a clustering algorithm 61, the obtained input data in order to place the input data in a clustering space 63. The clustering space is indicative of one or more sub-clusters (training clusters) 64a-c formed based on training data used for the trained machine learning algorithm. Further, the method may comprise determining the difference metric based on a position of the placed input data in the clustering space 63 relative to each sub-cluster 64a-c.

It should be noted that in some embodiments, the evaluation S113 of the obtained input data is not necessarily performed prior to the processing S102 of the input data. Instead, the evaluation S113 of the obtained input data may be performed concurrently or after the processing S102 of the input data by the trained machine learning algorithm. However, in such embodiments, the output of the trained machine learning algorithm may be rejected or otherwise flagged if the confidence level of the output of the trained machine learning algorithm is deemed to be below a threshold (and therefore not taken into consideration for the determination S107 of the path for execution). Analogously, if the confidence level of the output of the trained machine learning algorithm is deemed to be above a threshold, the output of the trained machine learning algorithm is taken into consideration for the determination S107 of the path for execution.

Executable instructions for performing these functions are, optionally, included in a non-transitory computer-readable storage medium or other computer program product the instructions being configured for execution by one or more processors.

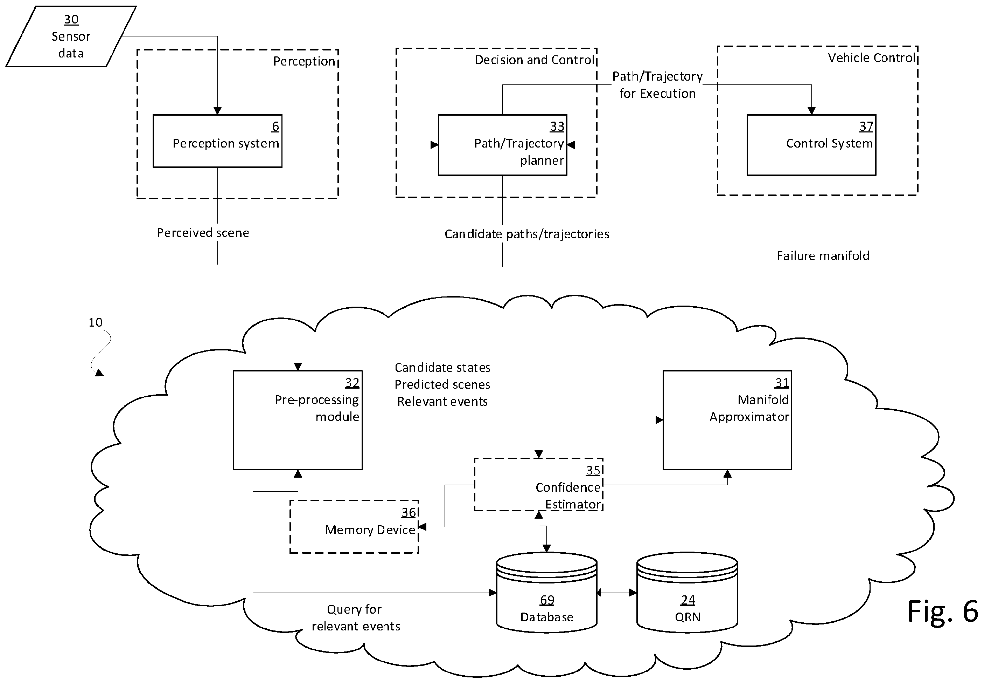

Turning to Fig. 6, there is depicted a schematic block diagram representation of a processing system 10 for estimating a risk exposure of a remote vehicle 1 equipped with an automated driving system (ADS) in accordance with some embodiments. In particular the in-vehicle processing system 10 is suitable for estimating the risk exposure of a remote and ADS-equipped vehicle 1 in terms of second order risks in run-time (i.e. while the vehicle is operating in traffic).

The processing system 10 may be comprised by a remote server, or by a plurality of remote servers forming a cloud-computing environment.

The processing system 10 comprises control circuitry that may be realized as a software controlled processor. However, the control circuitry may alternatively be realized wholly or partly in hardware. In the depicted embodiment of Fig. 6, the control circuitry comprises a set of modules 31, 32, 35, however, these are not necessarily to be construed as limiting to the present invention, but serve to further elucidate the present invention. As readily understood by the skilled artisan there are several ways to practically realize the inventive concepts disclosed herein, for example by other types of software/hardware architectures than the example embodiment illustrated in Fig. 6 without departing from the scope of the present invention. Such variations may depend on intended applications or system specifications.

Fig. 6 depicts the flow of information through exposure to a scene in the remote vehicle's surroundings, to the candidate state evaluation processes, and further to the subsequent determination of a path for the remote vehicle to execute. The processing system 10 comprises various control circuitry configured to perform the functions of the methods disclosed herein, where the functions may be included in a non-transitory computer-readable storage medium or other computer program product storing one or more programs configured for execution by the control circuitry . As mentioned, Fig. 6 serves to better elucidate the present invention by depicting various "modules" each of them linked to one or more specific functions described in the foregoing.

Accordingly, the control circuitry is configured to obtain input data comprising at least one of candidate state of the vehicle, where each candidate state comprises a set of candidate state parameters of the vehicle. The input data further comprises at least one predicted scene of the surrounding environment of the vehicle at each candidate state, where each predicted scene comprises a set of scene parameters of the surrounding environment of the vehicle and a scene probability metric of the scene occurring at an associated candidate state. Furthermore, the input data comprises at least one event for each predicted scene, where each event comprises an event probability metric of the event occurring in the predicted scene and a set of event parameters of each event.

The control circuitry is further configured to process the obtained input data using a trained machine learning algorithm, here denoted as a manifold approximator 31, configured to evaluate the at least one candidate state. The manifold approximator 31 is configured to generate an output indicating a candidate state as a high-risk state if that candidate state is associated with at least one predefined incident occurring with a probability exceeding a predefined allowable frequency of occurrence for that incident during a predicted temporal development of each event. Moreover, the manifold approximator 31 is configured to generate an output indicating a candidate state as an acceptable-risk state for the vehicle if that candidate state is associated with at least one predefined incident occurring with a probability below the predefined allowable frequency of occurrence for that incident during a predicted temporal development of each event. Then, the control circuitry is configured to determine a path to be executed by the vehicle based on the evaluated at least one candidate state. Thus, the processing system 10 may comprise a path/trajectory planning module (not shown) using the output form the manifold approximator as input to determine a path for execution by the remote vehicle that is subsequently transmitted to the remote vehicle. Alternatively, the output from the manifold approximator 31 may be in the form of a failure manifold that is transmitted to a path planning module 33 of the ADS of the remote vehicle, which uses the failure manifold in the path planning process (i.e. to update/reject candidate paths), whereupon a suitable path for execution can be sent to a vehicle control system 37 for executing the path. Thus, in some embodiments the control circuitry does not determine a path for execution by the remote vehicle, but instead transmits data (e.g. a failure manifold) indicative of the high-risk states and/or the acceptable-risk states.

In some embodiments, the processing system 10 further comprises a confidence estimation system 35, such as the one discussed with reference to Fig. 5 in the foregoing. Analogously, the confidence estimation system 35 of the processing system is configured to consume the input data prior to the input data being fed to the manifold approximator 31 in order to determine the operational validity or confidence level of the manifold approximator's 31 output. Then, if the confidence level is associated with an acceptable performance, the manifold approximator 31 is used to estimate the failure manifold (i.e. to evaluate the one or more candidate states). However, if the confidence level is not acceptable, the input data is instead stored (e.g. in a memory device 36) for subsequent use (e.g. to update the manifold approximator 31 through offline training). The confidence estimation module 35 may for example retrieve the training dataset used in the estimation of the confidence level of the manifold approximator's 31 output from a database 69.

Moreover, Fig. 6 illustrates an example of embodiment of how the predicted scenes and candidate states, serving as input to manifold approximator 31 (i.e. the trained machine learning algorithm), may be produced. As mentioned in the foregoing, the candidate states may be derived from candidate paths/trajectories as determined by a path planning or trajectory planning module 33 of the ADS of the remote vehicle. Thus, in some embodiments, the processing system 10 comprises a pre-processing module 32. The generated candidate paths/trajectories may be provided as an input to a pre-processing module 32 that is configured to extract the relevant candidate states. Furthermore, the pre-processing module 32 may be configured to derive the predicted scenes for the candidate states based on the perceived scenes of the ADS of the remote vehicle. In other words, one may utilize the ADS's perception system/module 6 in order to generate a perceived scene based on sensor data output by vehicle-mounted sensors. These perceived scenes may then be used to generate a predicted scene for a specific candidate state.

Moreover, as elaborated upon in the foregoing, the derivation of the predicted scenes based on the perceived scenes may be simplified by utilizing candidate paths/trajectories instead of relying on directly obtained candidate states. In more detail, with the notion of analysing a candidate trajectory or candidate path instead of a single state, the time evolution of the predicted scene is also connected to the trajectory or path leading up to the candidate state. Conversely, when analysing the candidate states directly, all possible predicted scenes pertaining to any trajectory leading to the state should be considered, even though only one of those trajectories or paths may be relevant from the ADS's perspective.

Accordingly, the candidate paths/trajectories may be used to derive the candidate states, and these are then used together to facilitate the generation of the predicted scenes from the perceived scenes, where the predicted scenes correspond to each (derived or otherwise obtained) candidate state. The predicted scenes possible at each candidate state may then be used to determine relevant events. The relevant events may for example be derived from a suitable database 69 of relevant events and the QRN. The database 69 preferably comprises the operational situations, conditions, and the thereto related assessments. The QRN on the other hand defines the "allowed" frequency of exposures of various incidents during various events (including those provided by the risk map) for the ADS of the remote vehicle. In some example embodiments, the candidate scene may be processed so to extract a set of features from the scene (e.g. road conditions, positions and types of external objects, and so forth) and then the database 69 may be queried based on the extracted features in order to check if the database contains one or more events having occurred when scenes with similar features have been experienced by other ADS-equipped vehicles.

Thus, using these two information sources (original database 69 and QRN 24) it is possible to derive the events that would be of relevance for the manifold estimation in a computationally efficient manner. The QRN may be stored in a suitable data repository accessible by the processing system 10.

In more detail, a QRN may be understood as a database comprising a "budget" of frequencies allowed for a certain type of incident (e.g. ADS in conflict with a Vulnerable Road User (VRU), ADS crash into another vehicle at velocity $\varepsilon$ [30, 60) km/h). The QRN may be based on a safety norm, which is a type of statistical goal, that in principle states the highest acceptable frequency of failures resulting in accidents having a given severity level. In the automotive industry this norm may be translated to the Automotive Safety Integrity Level (ASIL) of safety goals using the ISO26262 standard, based on estimates of severity, exposure, and controllability of a failure.

As an example, the highest integrity (ASIL D) is sought towards failures in situations that are common (exposure level E4), difficult to control (controllability level C3), and which can lead to accidents resulting in severe injuries or death (severity level S3). The safety goals (i.e. requirements) that are formulated to ensure that such failures do not occur, are thus assigned with ASIL D in accordance with ISO26262. This effectively means that the safety goal should have an estimated failure rate of less than $10^{-9}$ failures/hour. For failures associated with severity levels S2 (survival of involved actors probable) or S1 (light/moderate injuries), given the same exposure level (E4) and controllability level (C3), results in ASIL C and ASIL B, which can be translated to acceptable failure rates of $10^{-8}$ and $10^{-7}$ failures/hour respectively. Thus, for the sake of simplicity and readability, the severity levels discussed herein will be based on the severity level definitions as provided by the ASIL scheme.

In determining the severity of an outcome of an incident, one may for example map a certain outcome and the corresponding severity (e.g. a collision with a vehicle at 50 km/h results in an S2 injury). Accordingly, the "QRN" may comprise such a predefined mapping between a certain outcome and the corresponding severity level. Therefore, by including this type of mapping in the formation of the QRN, the resulting requirements can be transformed into an allowable frequency of occurrence for specific incidents.

The remote vehicle (not shown) preferably comprises an automated driving system (ADS), a perception module/system 6 (i.e. the perception system of the production platform), and a localization system 5. The localization system 5 is configured to monitor a geographical position and heading of the vehicle, and may in the form of a Global Navigation Satellite System (GNSS), such as a GPS. However, the localization system may alternatively be realized as a Real Time Kinematics (RTK) GPS in order to improve accuracy. The perception module/system 6 may refer to any commonly known system and/or functionality, e.g. comprised in one or more electronic control modules and/or nodes of the vehicle 1, adapted and/or configured to interpret sensory information - relevant for driving of the vehicle 1 - to identify e.g. obstacles, vehicle lanes, relevant signage, appropriate navigation paths etc. The exemplified perception system 6 may thus be adapted to rely on and obtain inputs from multiple data sources, such as automotive imaging, image processing, computer vision, and/or in-car networking, etc., in combination with sensory information. Such exemplifying sensory information may for instance be derived from one or more optional surrounding detecting sensors 6a-c comprised in and/or provided on-board the vehicle 1. The surrounding detecting sensors 6a-c may be represented by any arbitrary sensors adapted to sense and/or perceive the vehicle's 1 surroundings and/or whereabouts, and may e.g. refer to one or a combination of one or more of radar, LIDAR, sonar, camera, navigation system e.g. GPS, odometer and/or inertial measurement units.

The processing system 10 preferably comprises one or more processors, a memory, and one or more communication interfaces. The processor(s) may also be referred to as a control circuit or control circuitry. The control circuitry is configured to execute instructions stored in the memory to perform a method for estimating a risk exposure of a remote vehicle equipped with an automated driving system (ADS) according to any one of the embodiments disclosed herein. Stated differently, the memory of the processing system 10 can include one or more (non-transitory) computer-readable storage mediums, for storing computer-executable instructions, which, when executed by one or more computer processors, for example, can cause the computer processors to perform the techniques described herein. The memory optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

Further, the processing system 10 may be connected to external network(s) via for instance a wireless link (e.g. for retrieving input data). The same or some other wireless link may be used to communicate with remote vehicles or with other data entities. Cellular communication technologies may be used for long range communication such as to external networks and if the cellular communication technology used have low latency it may also be used for communication with the vehicles. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802. based solutions. ETSI is working on cellular standards for vehicle communication and for instance 5G is considered as a suitable solution due to the low latency and efficient handling of high bandwidths and communication channels.

## ESTIMATION OF RISK EXPOSURE IN A VIRTUAL TEST ENVIRONMENT AND TRAINING OF THE MACHINE LEARNING ALGORITHM

In order to train the first machine learning algorithm, i.e. the machine learning algorithm that is used to perform run-time evaluation the candidate states of the vehicle as disclosed herein, it is proposed to utilize the output from a simulation system that is configured to run a probabilistic reliability method on the same type of input data (candidate states, predicted scenes and relevant events) in order to estimate a risk exposure of the ADS. The output of the simulation system can therefore effectively be used to form a training dataset together with the provided input. Since the simulation system utilizes the same type of input data, the details related to the input data, the various examples of data content, and processes for deriving the data will for the sake of brevity and conciseness not be repeated, but are considered to be readily understood by the skilled reader. Fig. 8 is a schematic block diagram representation of a simulation system 80 for estimating a risk exposure of a vehicle equipped with an automated driving system (ADS) in a virtual test environment.

Moving on, probabilistic reliability method that is used by the simulation system 80 may for example be a structural reliability method, such as e.g. a subset simulation (may be abbreviated as SuS or SS) method. Structural reliability methods may be understood as advanced stochastic methods for estimating probabilities of rare failure events, and was originally developed within the field of engineering mechanics.

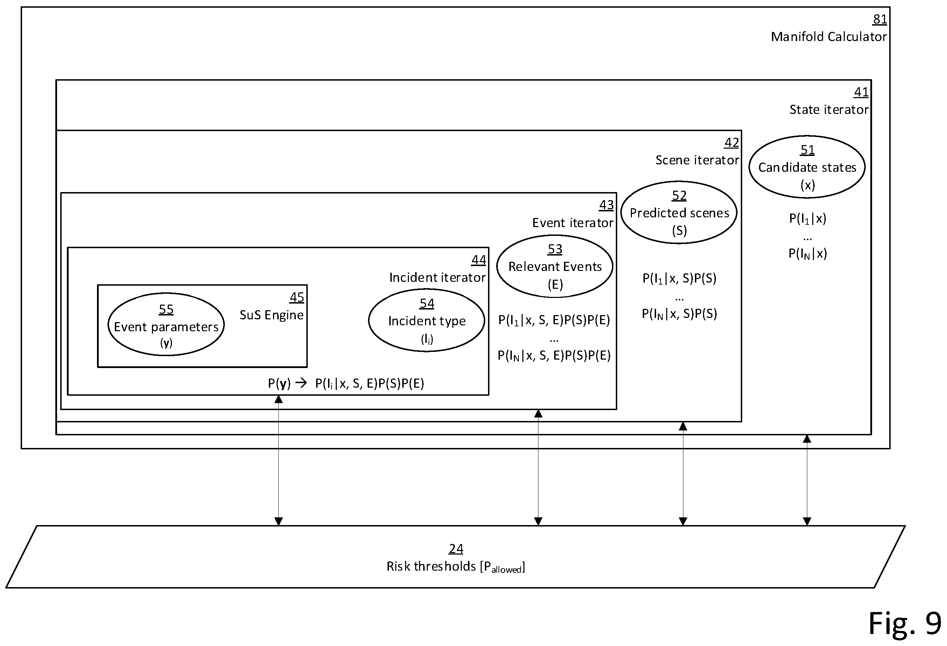

Due to their ability to efficiently transition scenario simulations towards the failure region in a high dimensional parameter space (which is the case for ADS simulations), the present inventors realized that it may be advantageously employed within software development and verification of ADSs. Furthermore, provided a simulation tool (software tool) and a multi-dimensional statistical model of the environment, structural reliability method simulations allows for efficiently estimating the probability of failure of an ADS. Since the failure rate estimations are based on statistical models that in turn are based on real traffic data, the failure rate estimations are highly relevant for the development and verification of ADS features. Further details related to the simulation system are given in reference to Fig. 9 below.

In short, the simulation system 80 is configured to obtain input data comprising at least one of candidate state of the vehicle, where each candidate state comprises a set of candidate state parameters of the vehicle. The input data further comprises at least one predicted scene of the surrounding environment of the vehicle at each candidate state, where each predicted scene comprises a set of scene parameters of the surrounding environment of the vehicle and a scene probability metric of the scene occurring at an associated candidate state. Furthermore, the input data comprises at least one event for each predicted scene, where each event comprises an event probability metric of the event occurring in the predicted scene and a set of event parameters of each event. The input data further comprises a set of risk thresholds, wherein each risk threshold defines a predefined allowable frequency of occurrence of each of a plurality of predefined incident, where each incident defines a potential traffic incident that the vehicle could be exposed to during a predicted temporal development of each event.

Further, the simulation system 80 is configured to estimate a probability of each predefined incident occurring in the virtual test environment by running a probabilistic reliability method based on each set of candidate state parameters, each set of scene parameters, the scene probability metric for each set of scene parameters, the set of event parameters, and the event probability metric for each set of event parameters. Then, for each candidate state that is associated with a predefined incident occurring with a probability exceeding the predefined allowable frequency of occurrence for that incident, the control circuitry is configured to determine that candidate state as a high-risk state for the vehicle, and for each candidate state that is associated with a predefined incident occurring with a probability below the predefined allowable frequency of occurrence for that incident, the control circuitry is configured to determine that candidate state as an acceptable-risk state for the vehicle.

The simulation system may in the present context be referred to as a "manifold calculator" 81, and the output of the simulation system 80 may, similar as before, be in the form of a "failure manifold", which may be understood as an output indicative of a subset of the candidate states that are associated with elevated second order risks and should therefore be avoided by the ADS.

Moreover, Fig. 9 illustrates an example of how the predicted scenes and candidate states, serving as input to the simulation, may be produced. Similar as before with respect to the "manifold approximator" 31, the candidate states may be derived from candidate paths/trajectories as determined by a path planning or trajectory planning module 33 of the ADS. Thus, the generated candidate paths/trajectories may be provided as an input to a pre-processing module 32 that is configured to extract the relevant candidate states. Furthermore, the pre-processing step may include deriving the predicted scenes for the candidate states based on the perceived scenes of the ADS. In other words, one may utilize the ADS's perception system/module 6 in order to generate a perceived scene based on sensor data that has been obtained from real-life traffic scenarios. These perceived scenes may then be used to generate a predicted scene for a specific candidate state.

Moreover, as elaborated upon in the foregoing, the derivation of the predicted scenes based on the perceived scenes may be simplified by utilizing candidate paths/trajectories instead of relying on directly obtained candidate states. With the notion of analysing a candidate trajectory or candidate path instead of a single state, the time evolution of the predicted scene is also connected to the trajectory or path leading up to the candidate state. Conversely, when analysing the candidate states directly, all possible predicted scenes pertaining to any trajectory leading to the state should be considered, even though only one of those trajectories or paths may have been relevant from the ADS's perspective.

Accordingly, the candidate paths/trajectories may be used to derive the candidate states, and these are then used together to facilitate the generation of the predicted scenes from the perceived scenes, where the predicted scenes correspond to each (derived or otherwise obtained) candidate state. The predicted scenes possible at each candidate state may then be used to determine relevant simulation scenes. The relevant events may for example be retrieved from an appropriate database (e.g. derived from a QRN 24). The QRN 24 is also used to obtain the set of risk thresholds necessary for the formation of the failure manifold. Then, this dataset is used as an input to a manifold calculator 81 configured to generate the failure manifold. The manifold calculator 81 may, be configured to run a five layered simulation as depicted in Fig. 9.

As mentioned, the QRN may be understood as a database comprising a "budget" of frequencies allowed for a certain type of incident (e.g. ADS in conflict with a VRU, ADS crash into another vehicle at velocity $\varepsilon$ [30, 60) km/h). Accordingly, there is a need for the simulation system to account for all of these incident types. Therefore, in order to find the probability of failure with respect to each of those incidents as defined by the QRN (or any other comparable source of information) one can, in accordance with some embodiments, run a subset simulation method as depicted in Fig. 9. The subset simulation allows for estimating the probability of failure of the ADS in various scenarios with different severity levels (e.g. collisions with minor injuries, moderate injuries, and fatal injuries).

Thus, Fig. 9 is a schematic block diagram representation of a simulation architecture suitable for realizing the manifold calculator 81. In more detail, Fig. 9 shows the different iteration levels 41-44 of the proposed simulation system 81. In each level the relevant parameters are iterated, and the derived probabilities are summed up through the law of total probability. The probabilities obtained at each level of iteration 41-44 are compared to the level in the QRN 24. If a violation is found that specific iteration can be stopped as a failure state (high risk state) has been identified.

In the innermost level (incident iterator 44) of the simulation architecture depicted in Fig. 9, handles the search across the parameters of the simulated/analysed event and the given predicted scene - i.e. the parameter space $\vec{y}$ (denoted as $\gamma$ in Fig. 9). Each such search, results in an estimation of the probability of failure in relation to defined incident type $I_i$. The second and third iteration levels - i.e. the iterations pertaining to the predicted scene (scene iterator 42) and the events (event iterator 43), respectively - are preferably iterated in such a way that the configuration most likely to produce a violation of the thresholds ($P_{allowed}$) defined in the QRN 24 are considered first. This may for example be achieved by considering events associated with incidents that have a relatively low allowable frequency of occurrence ($P_{allowed}$) as defined in the QRN 24. Furthermore, if the probabilities computed at any level, i.e. the output of any iterator 41-44, is found to violate the allowable frequency of occurrence ($P_{allowed}$) as defined in the QRN 24, the simulation for that particular iteration level 41-44 can be stopped as a failure state (i.e. high-risk state) has been identified. In the architecture depicted in Fig. 9, it is assumed that the scenes are independent from the unknown event that is happening, i.e. P(E, S) = P(E)P(S).

In order to further elucidate the simulation architecture 81, an illustrative example of a simulated scene is depicted in Fig. 4d. More specifically, Fig. 4d illustrates a specific predicted scene for the obtained or otherwise derived candidate state 21, with one specific instance of the state of the external vehicle 2 (dynamic external object) having a predicted geographical position indicated by the broken-line vehicle 92. The candidate state 21 is indicated by the rightmost patterned vehicle. Moreover, in the depicted example, the event is the appearance of a non-perceived external object, here in the form of a moose 91, appearing from the previously occluded area 52.

The simulation system 81 has arrived at a specific point in the iteration across candidate states of the vehicle (i.e. the candidate state 21), and a specific predicted scene where the trailing vehicle 2 is predicted to be in a state denoted by the broken-line vehicle 92. Furthermore, the predicted scene including a set of scene parameters may further comprise a predicted speed of the external vehicle 2, a predicted heading of the external vehicle 2, as well as other scene parameters as discussed in the foregoing. Further, an event in the form of a moose 91 running out from the occluded area 52 behind the stationary vehicle 3 is considered in the simulated example. Thus, the system 81 will iterate across the incident types $I_1 - I_N$ (N being a positive integer $\geq 1$) and subsequently search the parameter space $\vec{y}$, here including the potential actions of the external vehicle 2, the potential actions of the stationary vehicle 3 (which may start, but perhaps with a low probability of doing so), and the potential actions of the moose 91. The sub-set simulation across $\vec{y}$ will result in an estimate of the probability of failure for the specific incident $I_i$ that is considered in each iteration. An example of the output from the simulation is provided in table 1 below.

Table 1: Example of simulation output for a number of different incident types in relation to the scenario illustrated in Fig. 4d.

| Incident type | Probability of failure [estimated] $P(I_i \mid x, S, E)P(S)P(E)$ | QRN, $P_{allowed}(I_i)$ |
|---|---|---|
| $I_1$ = collision with moose [v > 70 km/h] | $10^{-14}$ h$^{-1}$ | $10^{-11}$ h$^{-1}$ |
| **$I_2$ = collision with moose [v $\in$ [30, 70) km/h]** | **$10^{-7}$ h$^{-1}$** | **$10^{-8}$ h$^{-1}$** |
| ... | ... | |
| $I_k$ = collision with car [v $\varepsilon$ [30, 70) km/h] | $10^{-9}$ h$^{-1}$ | $10^{-6}$ h$^{-1}$ |
| | | |
| $I_m$ = near-collision with car distance at stand-still < 20 cm | $10^{-7}$ h$^{-1}$ | $10^{-4}$ h$^{-1}$ |
| .... | ... | ... |

Accordingly, Table 1 indicates the probability of failure of the ADS from the subset simulation corresponding to the realization of the scenario depicted in Fig. 4d, and accordingly the risk exposure of the vehicle for that scenario. It should be noted that the probability of failure of the ADS pertaining to the incident, candidate state, predicted scene and event $P(I_i \mid x, S, E)$ is here multiplied by the probabilities of the predicted scene $P(S)$ and event $P(E)$ (i.e. probability of the scene occurring and the probability of the event occurring) in order to be able to directly compare to the allowable frequency of occurrence defined by the QRN ($P_{allowed}(I_i)$). In the example shown in Table 1, the estimated probability of failure for the second incident type ($I_2$) is estimated to be at $10^{-7}$ h$^{-1}$, and this is found to violate the threshold of allowable frequency of occurrence for that incident type ($10^{-8}$ h$^{-1}$). Thus, in some embodiments, the iteration for that candidate state could stop as the analysed candidate state 21 is a state with a too high second order risk. However, for the sake of the example, and to further clarify the simulation architecture, some additional rows of the table have been populated.

In order to increase the computational efficiency of the simulation, one can order the set of incidents for iteration by dividing the allowed level as defined by the QRN with the probabilities of the event and the predicted scene in ascending order with the lowest number first. In other words, order the incidents by $\frac{P_{allowed}(i_i)}{P(S)P(E)}$. Thereby, one increases the chances of finding a failed incident early in the simulation effectively reducing the need for iterating across all possible incidents for each event in each predicted scene of each candidate state.

Further, in order to obtain a "final" estimate of the risk exposure of the ADS-equipped vehicle, and in particular of the second order risk for each candidate state, one may add the contributions from all event and predicted scenes for each incident. This may be performed based on the law of total probabilities, i.e. to get

$$P(I_i|x,S) = \sum_{j \in \mathbb{N}_E} P\big(\big(I_i|x,S,E_j\big)P\big(E_j\big)\big),$$ where $\mathbb{N}_E$ collects all relevant events.

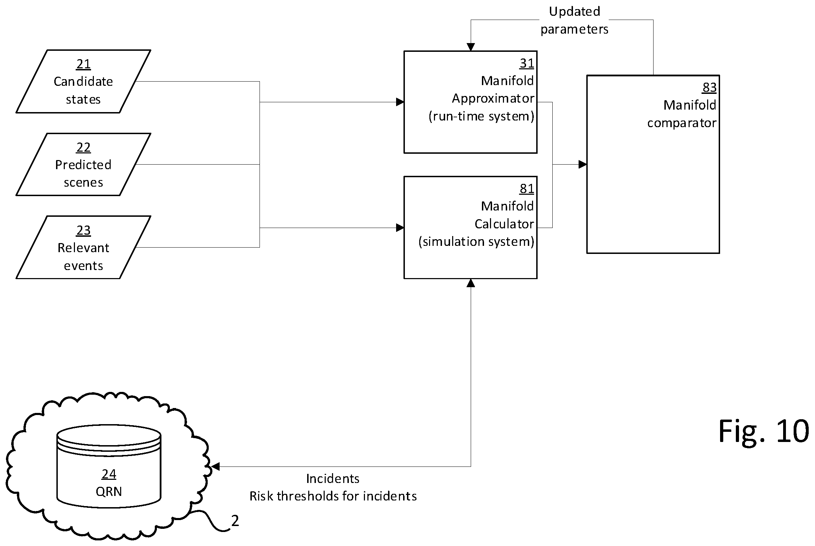

Moving on, the first machine learning algorithm making up the manifold approximator 31, may in accordance with some embodiments, be configured/trained by off-line training in comparison to the above-discussed simulation system. The training procedure is schematically depicted in Fig. 10, which is a schematic block diagram representation of a system for training the machine learning algorithm 31. The training data used as input are the candidate states, the associated predicted scenes and the set of relevant events. These are then consumed by the machine learning algorithm 31 and also processed through the simulation executed by the manifold calculator 81. The outputs of these two are then compared in order to construct a cost function with which the first machine learning algorithm is updated. The cost function calculation may be performed by a suitable module 83 as known in the art. However, as the skilled person realizes other training schemes are analogously applicable, such as supervised learning, where the output of the manifold calculator 81 forms the supervisory signal (i.e. desired output).

In reference to the above-mentioned evaluation of the confidence level of the first machine learning algorithm's output, the stored input data associated with situation/scenario where the confidence level of the machine learning algorithm was below the threshold can efficiently be used to train the machine learning algorithm in the setup depicted in Fig. 10.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory.

For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) (associated with the processing system 10) may be or include any number of hardware components for conducting data or signal processing or for executing computer code stored in memory. The processing system has an associated memory, and the memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware. It will also be understood that, although the term first, second, etc. may be used herein to describe various elements, these elements should not be limited by these terms. These terms are only used to distinguish one element from another. For example, a first function could be termed a second function, and, similarly, a second function could be termed a first function, without departing from the scope of the embodiments. The first function and the second function are both functions, but they are not the same function.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (S100) for estimating a risk exposure of a remote vehicle equipped with an automated driving system (ADS), the method comprising:

   obtaining (S101) input data comprising:

   at least one candidate state of the remote vehicle, wherein each candidate state comprises a set of candidate state parameters of the remote vehicle,
   at least one predicted scene of the surrounding environment of the remote vehicle at each candidate state, wherein each predicted scene comprises a set of scene parameters of the surrounding environment of the remote vehicle and a scene probability metric of the scene occurring at an associated candidate state,
   at least one event for each predicted scene, wherein each event comprises an event probability metric of the event occurring in the predicted scene and a set of event parameters of each event;

   processing (S102) the obtained input data using a trained machine learning algorithm configured to evaluate the at least one candidate state by:

   for each candidate state that is associated with at least one predefined incident occurring with a probability exceeding a predefined allowable frequency of occurrence for that incident during a predicted temporal development of each event, generating (S104) an output indicating that candidate state as a high-risk state for the remote vehicle; and
   for each candidate state that is associated with at least one predefined incident occurring with a probability below the predefined allowable frequency of occurrence for that incident during a predicted temporal development of each event, generating (S105) an output indicating that candidate state as an acceptable-risk state for the remote vehicle;

determining (S107) a path to be executed by the remote vehicle based on the evaluated at least one candidate state, wherein the determination (S107) of a path to be executed by the remote vehicle comprises rejecting any candidate path comprising a candidate state that is determined as a high-risk state for the vehicle.

2. The method (S100) according to claim 1, wherein the set of candidate state parameters of the remote vehicle comprises at least one of a geographical position of the remote vehicle, a heading of the remote vehicle, a set of remote vehicle state parameters, an ADS configuration of the remote vehicle, an actuation capability of the remote vehicle, remote vehicle dimensions, and a remote vehicle weight.

3. The method (S100) according to claim 1 or 2, further comprising:

receiving, from the remote vehicle, at least one candidate path for the remote vehicle;
receiving, from the remote vehicle, a perceived scene of the surrounding environment of the remote vehicle;
wherein the step of obtaining input data comprising the at least one candidate state of the remote vehicle comprises deriving (S110) the at least one candidate state based on the received at least one candidate path;
wherein the step of obtaining input data comprising the at least one predicted scene comprises deriving (S111) the predicted scene based on the received at least one candidate path and the received perceived scene;
wherein the step of determining (S107) the path to be executed by the remote vehicle comprises:
updating or rejecting the obtained at least one candidate path.

4. The method (S100) according to claim 3, wherein the step of determining (S107) the path to be executed comprises:
for any candidate path associated with a candidate state that is determined (S105) as an acceptable-risk state for the remote vehicle, updating that candidate path to a less conservative path based on a set of quality criteria.

5. The method (S100) according to any one of claims 1 - 4, further comprising:

prior to processing (S102) the obtained input data using the first trained machine learning algorithm, evaluating (S113) the obtained input data by comparing the obtained input data with a dataset used to train the first machine learning algorithm in order to determine a difference measure between the obtained input data and the dataset used to train the first machine learning algorithm;
wherein the steps of processing (S102) the input data using the first trained machine learning algorithm and determining (S107) the path to be executed by the remote vehicle are only performed if the difference measure is below a threshold; and
if the difference metric is above the threshold, the method (S100) further comprises storing (S114) the obtained input data.

6. The method (S100) according to claim 5, wherein the dataset used to train the first machine learning algorithm defines at least one parameter space in a multi-dimensional reference frame, and wherein the difference metric comprises a distance measure between the input data and the at least one parameter space in the multi-dimensional reference frame, and wherein the threshold is a distance threshold.

7. The method (S100) according to any one of claims 1 - 6, wherein the set of scene parameters comprises at least one of:

a predicted location of free-space areas in the surrounding environment of the remote vehicle and an uncertainty estimation for the predicted location of free-space areas;
a predicted location of static external objects in the surrounding environment of the remote vehicle and an uncertainty estimation for the predicted location of the static external objects;
a predicted location of dynamic external objects in the surrounding environment of the remote vehicle and an uncertainty estimation for the predicted location of the dynamic external objects;
a predicted heading of the dynamic external objects in the surrounding environment of the remote vehicle and an uncertainty estimation for the predicted heading of the dynamic external objects;
a set of predicted dynamical state parameters of the dynamic external objects in the surrounding environment of the remote vehicle and an uncertainty estimation for each predicted dynamical state parameter of the set of predicted dynamical state parameters of the dynamic external objects; and
a set of environmental conditions in the surrounding environment of the remote vehicle and an uncertainty estimation for each environmental condition of the set of environmental conditions in the surrounding environment of the remote vehicle.

8. The method (S100) according to any one of claims 1 - 7, wherein the set of event parameters comprises at least one of:

a perturbation of one or more scene parameters of the set of scene parameters, an uncertainty estimation for the perturbed one or more scene parameter; and
a set of object parameters of a non-perceived external object, the set of object parameters including a location of the non-perceived external object, a heading of the non-perceived external object, and a speed of the non-perceived external object.

9. The method (S100) according to any one of claims 1 - 8, further comprising:
transmitting (S108) the determined path for execution to the remote vehicle.

10. A computer-readable storage medium storing one or more programs configured to be executed by one or more processors of a processing system, the one or more programs comprising instructions for performing the method (S100) according to any one of the preceding claims.

11. A processing system (10) for estimating a risk exposure of a remote vehicle (1) equipped with an automated driving system (ADS), the processing system (10) comprising control circuitry configured to:

obtain input data comprising:

at least one candidate state (21) of the remote vehicle, wherein each candidate state comprises a set of candidate state parameters of the remote vehicle,
at least one predicted scene (22) of the surrounding environment of the remote vehicle at each candidate state (21), wherein each predicted scene (22) comprises a set of scene parameters of the surrounding environment of the remote vehicle and a scene probability metric of the scene occurring at an associated candidate state,
at least one event (23) for each predicted scene, wherein each event (23) comprises an event probability metric of the event occurring in the predicted scene (22) and a set of event parameters of each event;

process the obtained input data using a trained machine learning algorithm (31) configured to evaluate the at least one candidate state (21) by:

for each candidate state (21) that is associated with at least one predefined incident occurring with a probability exceeding a predefined allowable frequency of occurrence for that incident during a predicted temporal development of each event, generating an output indicating that candidate state as a high-risk state for the remote vehicle; and
for each candidate state (21) that is associated with at least one predefined incident occurring with a probability below the predefined allowable frequency of occurrence for that incident during a predicted temporal development of each event, generating an output indicating that candidate state as an acceptable-risk state for the remote vehicle;

determine a path to be executed by the remote vehicle (1) based on the evaluated at least one candidate state, wherein the determination of a path to be executed by the remote vehicle comprises rejecting any candidate path comprising a candidate state that is determined as a high-risk state for the vehicle.

12. A remote server comprising the processing system (10) according to claim 11.

13. A cloud environment comprising one or more remote servers according to claim 12.

**Patentansprüche**

1. Computerimplementiertes Verfahren (S100) zum Schätzen einer Risikoexposition eines entfernten Fahrzeugs, das mit einem automatisierten Fahrsystem (ADS) ausgestattet ist, wobei das Verfahren Folgendes umfasst:

Erlangen (S101) von Eingabedaten, die Folgendes umfassen:

mindestens einen Kandidatenzustand des entfernten Fahrzeugs, wobei jeder Kandidatenzustand einen Satz von Kandidatenzustandsparametern des entfernten Fahrzeugs umfasst,
mindestens eine vorhergesagte Szene der umgebenden Umwelt des entfernten Fahrzeugs bei jedem Kandidatenzustand, wobei jede vorhergesagte Szene einen Satz von Szenenparametern der umgebenden Umwelt des entfernten Fahrzeugs und eine Szenenwahrscheinlichkeitsmetrik der Szene, die bei einem zugeordneten Kandidatenzustand auftritt, umfasst,
mindestens ein Ereignis für jede vorhergesagte Szene, wobei jedes Ereignis eine Ereigniswahrscheinlichkeitsmetrik des Ereignisses, das in der vorhergesagten Szene auftritt, und einen Satz von Ereignisparametern jedes Ereignisses umfasst;

Verarbeiten (S102) der erlangten Eingabedaten unter Verwendung eines trainierten Maschinenlernalgorithmus, der dazu konfiguriert ist, den mindestens einen Kandidatenzustand durch Folgendes zu bewerten:

für jeden Kandidatenzustand, der mindestens einem vordefinierten Vorfall zugeordnet ist, der mit einer Wahrscheinlichkeit auftritt, die eine vordefinierte zulässige Auftrittshäufigkeit für diesen Vorfall während einer vorhergesagten zeitlichen Entwicklung für jedes Ereignis überschreitet, Erzeugen (S104) einer Ausgabe, die den Kandidatenzustand als einen Zustand mit hohem Risiko für das entfernte Fahrzeug angibt; und
für jeden Kandidatenzustand, der mindestens einem vordefinierten Vorfall zugeordnet ist, der mit einer Wahrscheinlichkeit unterhalb der vordefinierten zulässigen Auftrittshäufigkeit für diesen Vorfall während einer vorhergesagten zeitlichen Entwicklung für jedes Ereignis auftritt, Erzeugen (S105) einer Ausgabe, die den Kandidatenzustand als einen Zustand mit akzeptablem Risiko für das entfernte Fahrzeug angibt;

Bestimmen (S107) eines durch das entfernte Fahrzeug auszuführenden Wegs basierend auf dem bewerteten mindestens einen Kandidatenzustand, wobei die Bestimmung (S107) eines durch das entfernte Fahrzeug auszuführenden Wegs Ablehnen jeglichen Kandidatenwegs umfasst, der einen Kandidatenzustand umfasst, der als ein Zustand mit hohem Risiko für das Fahrzeug bestimmt wurde.

2. Verfahren (S100) nach Anspruch 1, wobei der Satz von Kandidatenzustandsparametern des entfernten Fahrzeugs mindestens eines von einer geografischen Position des entfernten Fahrzeugs, einem Kurs des entfernten Fahrzeugs, einem Satz von Zustandsparametern des entfernten Fahrzeugs, einer ADS-Konfiguration des entfernten Fahrzeugs, einer Betätigungsfähigkeit des entfernten Fahrzeugs, Abmessungen des entfernten Fahrzeugs und einem Gewicht des entfernten Fahrzeugs umfasst.

3. Verfahren (S100) nach Anspruch 1 oder 2, ferner umfassend:

Empfangen, von dem entfernten Fahrzeug, mindestens eines Kandidatenwegs für das entfernte Fahrzeug;
Empfangen, von dem entfernten Fahrzeug, einer wahrgenommenen Szene der umgebenden Umwelt des entfernten Fahrzeugs;
wobei der Schritt des Erlangens von Eingabedaten, die den mindestens einen Kandidatenzustand des entfernten Fahrzeugs umfassen, Ableiten (S110) des mindestens einen Kandidatenzustands basierend auf dem mindestens einen Kandidatenweg umfasst;
wobei der Schritt des Erlangens von Eingabedaten, welche die mindestens eine vorhergesagte Szene umfassen, Ableiten (S111) der vorhergesagten Szene basierend auf dem mindestens einen Kandidatenweg und der empfangenen wahrgenommenen Szene umfasst;
wobei der Schritt des Bestimmens (S107) des durch das entfernte Fahrzeug auszuführenden Wegs Folgendes umfasst:
Aktualisieren oder Ablehnen des erlangten mindestens einen Kandidatenwegs.

4. Verfahren (S100) nach Anspruch 3, wobei der Schritt des Bestimmens (S107) des auszuführenden Wegs Folgendes umfasst:
für jeden Kandidatenweg, der einem Kandidatenzustand zugeordnet ist, der als ein Zustand mit akzeptablem Risiko für das entfernte Fahrzeug bestimmt (S105) wurde, Aktualisieren des Kandidatenwegs auf einen weniger konservativen Weg basierend auf einem Satz von Qualitätskriterien.

5. Verfahren (S100) nach einem der Ansprüche 1-4, ferner umfassend:

vor dem Verarbeiten (S102) der erlangten Eingabedaten unter Verwendung des ersten trainierten Maschinenlernalgorithmus, Bewerten (S113) der erlangten Eingabedaten durch Vergleichen der Eingabedaten mit einem Datensatz, der zum Trainieren des ersten Maschinenlernalgorithmus verwendet wurde, um ein Differenzmaß zwischen den erlangten Eingabedaten und dem Datensatz, der zum Trainieren des ersten Maschinenlernalgorithmus verwendet wurde, zu bestimmen;

wobei der Schritt des Verarbeitens (S102) der Eingabedaten unter Verwendung des ersten Maschinenlernalgorithmus und das Bestimmen (S107) des durch das entfernte Fahrzeug auszuführenden Wegs nur durchgeführt werden, wenn das Differenzmaß unter einem Schwellenwert liegt; und,

wenn die Differenzmetrik über dem Schwellenwert liegt, das Verfahren (S100) ferner Speichern (S114) der erlangten Eingabedaten umfasst.

6. Verfahren (S100) nach Anspruch 5, wobei der Datensatz, der zum Trainieren des ersten Maschinenlernalgorithmus verwendet wird, mindestens einen Parameterraum in einem mehrdimensionalen Referenzrahmen definiert und wobei die Differenzmetrik ein Abstandsmaß zwischen den Eingabedaten und dem mindestens einen Parameterraum in dem mehrdimensionalen Referenzrahmen umfasst und wobei der Schwellenwert ein Abstandsschwellenwert ist.

7. Verfahren (S100) nach einem der Ansprüche 1-6, wobei der Satz von Szenenparametern mindestens eines des Folgenden umfasst:

einen vorhergesagten Standort von Freiraumbereichen in der umgebenden Umwelt des entfernten Fahrzeugs und eine Unsicherheitsschätzung für den vorhergesagten Standort von Freiraumbereichen;

einen vorhergesagten Standort von statischen externen Objekten in der umgebenden Umwelt des entfernten Fahrzeugs und eine Unsicherheitsschätzung für den vorhergesagten Standort der statischen externen Objekte;

einen vorhergesagten Standort von dynamischen externen Objekten in der umgebenden Umwelt des entfernten Fahrzeugs und eine Unsicherheitsschätzung für den vorhergesagten Standort der dynamischen externen Objekte;

einen vorhergesagten Kurs der dynamischen externen Objekte in der umgebenden Umwelt des entfernten Fahrzeugs und eine Unsicherheitsschätzung für den vorhergesagten Kurs der dynamischen externen Objekte;

einen Satz von vorhergesagten dynamischen Zustandsparametern der dynamischen externen Objekte in der umgebenden Umwelt des entfernten Fahrzeugs und eine Unsicherheitsschätzung für jeden vorhergesagten dynamischen Zustandsparameter des Satzes von vorhergesagten dynamischen Zustandsparametern der dynamischen externen Objekte; und

einen Satz von Umgebungsbedingungen in der umgebenden Umwelt des entfernten Fahrzeugs und eine Unsicherheitsschätzung für jede Umgebungsbedingung des Satzes von Umgebungsbedingungen in der umgebenden Umwelt des entfernten Fahrzeugs.

8. Verfahren (S100) nach einem der Ansprüche 1-7, wobei der Satz von Ereignisparametern mindestens eines des Folgenden umfasst:

eine Abweichung von einem oder mehreren Szenenparametern des Satzes von Szenenparametern, eine Unsicherheitsschätzung für den/die abweichenden einen oder mehreren Szenenparameter; und

einen Satz von Objektparametern eines nicht wahrgenommenen externen Objekts, wobei der Satz von Objektparametern einen Standort des nicht wahrgenommenen externen Objekts, einen Kurs des nicht wahrgenommenen externen Objekts und eine Geschwindigkeit des nicht wahrgenommenen externen Objekts beinhaltet.

9. Verfahren (S100) nach einem der Ansprüche 1-8, ferner umfassend: Übertragen (S108) des bestimmten Wegs zur Ausführung an das entfernte Fahrzeug.

10. Computerlesbares Speichermedium, das ein oder mehrere Programme speichert, die dazu konfiguriert sind, durch einen oder mehrere Prozessoren eines Verarbeitungssystems ausgeführt zu werden, wobei das eine oder die mehreren Programme Anweisungen zum Durchführen des Verfahrens (S100) nach einem der vorhergehenden Ansprüche umfassen.

11. Verarbeitungssystem (10) zum Schätzen einer Risikoexposition eines entfernten Fahrzeugs (1), das mit einem automatisierten Fahrsystem (ADS) ausgestattet ist, wobei das Verarbeitungssystem (10) eine Steuerschaltung umfasst, die zu Folgendem konfiguriert ist:

Erlangen von Eingabedaten, die Folgendes umfassen:

mindestens einen Kandidatenzustand (21) des entfernten Fahrzeugs, wobei jeder Kandidatenzustand einen Satz von Kandidatenzustandsparametern des entfernten Fahrzeugs umfasst,
mindestens eine vorhergesagte Szene (22) der umgebenden Umwelt des entfernten Fahrzeugs bei jedem Kandidatenzustand (21), wobei jede vorhergesagte Szene (22) einen Satz von Szenenparametern der umgebenden Umwelt des entfernten Fahrzeugs und eine Szenenwahrscheinlichkeitsmetrik der Szene, die bei einem zugeordneten Kandidatenzustand auftritt, umfasst,
mindestens ein Ereignis (23) für jede vorhergesagte Szene, wobei jedes Ereignis (23) eine Ereigniswahrscheinlichkeitsmetrik des Ereignisses, das in der vorhergesagten Szene (22) auftritt, und einen Satz von Ereignisparametern jedes Ereignisses umfasst;

Verarbeiten der erlangten Eingabedaten unter Verwendung eines trainierten Maschinenlernalgorithmus (31), der dazu konfiguriert ist, den mindestens einen Kandidatenzustand (21) durch Folgendes zu bewerten:

für jeden Kandidatenzustand (21), der mindestens einem vordefinierten Vorfall zugeordnet ist, der mit einer Wahrscheinlichkeit auftritt, die eine vordefinierte zulässige Auftrittshäufigkeit für diesen Vorfall während einer vorhergesagten zeitlichen Entwicklung für jedes Ereignis überschreitet, Erzeugen einer Ausgabe, die den Kandidatenzustand als einen Zustand mit hohem Risiko für das entfernte Fahrzeug angibt; und
für jeden Kandidatenzustand (21), der mindestens einem vordefinierten Vorfall zugeordnet ist, der mit einer Wahrscheinlichkeit unterhalb der vordefinierten zulässigen Auftrittshäufigkeit für diesen Vorfall während einer vorhergesagten zeitlichen Entwicklung für jedes Ereignis auftritt, Erzeugen einer Ausgabe, die den Kandidatenzustand als einen Zustand mit akzeptablem Risiko für das entfernte Fahrzeug angibt;

Bestimmen eines durch das entfernte Fahrzeug (1) auszuführenden Wegs basierend auf dem bewerteten mindestens einen Kandidatenzustand, wobei die Bestimmung eines durch das entfernte Fahrzeug auszuführenden Wegs Ablehnen jeglichen Kandidatenwegs umfasst, der einen Kandidatenzustand umfasst, der als ein Zustand mit hohem Risiko für das Fahrzeug bestimmt wurde.

**12.** Remote-Server, umfassend das Verarbeitungssystem (10) nach Anspruch 11.

**13.** Cloud-Umgebung, umfassend einen oder mehrere Remote-Server nach Anspruch 12.

**Revendications**

**1.** Procédé (S100) mis en œuvre par ordinateur pour l'estimation d'une exposition au risque d'un véhicule distant équipé d'un système de conduite automatisé (ADS), le procédé comprenant :

l'obtention (S101) de données d'entrée comprenant :

au moins un état candidat du véhicule distant, dans lequel chaque état candidat comprend un ensemble de paramètres d'état candidat du véhicule distant,
au moins une scène prédite de l'environnement environnant du véhicule distant à chaque état candidat, dans lequel chaque scène prédite comprend un ensemble de paramètres de scène de l'environnement environnant du véhicule distant et une métrique de probabilité de scène de l'occurrence de la scène à un état candidat associé,
au moins un événement pour chaque scène prédite, dans lequel chaque événement comprend une métrique de probabilité d'événement de l'occurrence de l'événement dans la scène prédite et un ensemble de paramètres d'événement de chaque événement ;

le traitement (S102) des données d'entrée obtenues en utilisant un algorithme d'apprentissage automatique entraîné configuré pour évaluer l'au moins un état candidat par :

pour chaque état candidat qui est associé à au moins un incident prédéfini se produisant avec une probabilité dépassant une fréquence d'occurrence admissible prédéfinie pour cet incident pendant un développement temporel prédit de chaque événement, la génération (S104) d'une sortie indiquant cet état candidat comme un état à haut risque pour le véhicule distant ; et

pour chaque état candidat qui est associé à au moins un incident prédéfini se produisant avec une probabilité inférieure à la fréquence d'occurrence admissible prédéfinie pour cet incident pendant un développement temporel prédit de chaque événement, la génération (S105) d'une sortie indiquant cet état candidat comme un état à risque acceptable pour le véhicule distant ;

la détermination (S107) d'un chemin à réaliser par le véhicule distant sur la base de l'au moins un état candidat évalué, dans lequel la détermination (S107) d'un chemin à réaliser par le véhicule distant comprend le rejet de tout chemin candidat comprenant un état candidat qui est déterminé comme un état à haut risque pour le véhicule.

2. Procédé (S100) selon la revendication 1, dans lequel l'ensemble de paramètres d'état candidat du véhicule distant comprend au moins l'un parmi une position géographique du véhicule distant, un cap du véhicule distant, un ensemble de paramètres d'état du véhicule distant, une configuration ADS du véhicule distant, une capacité d'actionnement du véhicule distant, des dimensions du véhicule distant et un poids du véhicule distant.

3. Procédé (S100) selon la revendication 1 ou 2, comprenant en outre :

la réception, provenant du véhicule distant, d'au moins un chemin candidat pour le véhicule distant ;
la réception, provenant du véhicule distant, d'une scène perçue de l'environnement environnant du véhicule distant ;
dans lequel l'étape d'obtention de données d'entrée comprenant l'au moins un état candidat du véhicule distant comprend la dérivation (S110) de l'au moins un état candidat sur la base de l'au moins un chemin candidat reçu ;
dans lequel l'étape d'obtention de données d'entrée comprenant l'au moins une scène prédite comprend la dérivation (S111) de la scène prédite sur la base de l'au moins un chemin candidat reçu et de la scène perçue reçue ;
dans lequel l'étape de détermination (S107) du chemin à réaliser par le véhicule distant comprend :
la mise à jour ou le rejet de l'au moins un chemin candidat obtenu.

4. Procédé (S100) selon la revendication 3, dans lequel l'étape de détermination (S107) du chemin à réaliser comprend :
pour tout chemin candidat associé à un état candidat qui est déterminé (S105) comme un état à risque acceptable pour le véhicule distant, la mise à jour de ce chemin candidat en un chemin moins conservateur sur la base d'un ensemble de critères de qualité.

5. Procédé (S100) selon l'une quelconque des revendications 1 à 4, comprenant en outre :

avant le traitement (S102) des données d'entrée obtenues en utilisant le premier algorithme d'apprentissage automatique entraîné, l'évaluation (S113) des données d'entrée obtenues en comparant les données d'entrée obtenues avec un ensemble de données utilisé pour entraîner le premier algorithme d'apprentissage automatique afin de déterminer une mesure de différence entre les données d'entrée obtenues et l'ensemble de données utilisé pour entraîner le premier algorithme d'apprentissage automatique ;
dans lequel les étapes de traitement (S102) des données d'entrée en utilisant le premier algorithme d'apprentissage automatique entraîné et de détermination (S107) du chemin à réaliser par le véhicule distant sont réalisées uniquement si la mesure de différence est inférieure à un seuil ; et
si la métrique de différence est supérieure au seuil, le procédé (S100) comprend en outre le stockage (S114) des données d'entrée obtenues.

6. Procédé (S100) selon la revendication 5, dans lequel l'ensemble de données utilisé pour entraîner le premier algorithme d'apprentissage automatique définit au moins un espace de paramètres dans un référentiel multidimensionnel, et dans lequel la métrique de différence comprend une mesure de distance entre les données d'entrée et l'au moins un espace de paramètres dans le référentiel multidimensionnel, et dans lequel le seuil est un seuil de distance.

7. Procédé (S100) selon l'une quelconque des revendications 1 à 6, dans lequel l'ensemble de paramètres de scène comprend au moins l'un parmi :

un emplacement prédit de zones d'espace libre dans l'environnement environnant du véhicule distant et une estimation d'incertitude pour l'emplacement prédit de zones d'espace libre ;
un emplacement prédit d'objets externes statiques dans l'environnement environnant du véhicule distant et une estimation d'incertitude pour l'emplacement prédit des objets externes statiques ;
un emplacement prédit d'objets externes dynamiques dans l'environnement environnant du véhicule distant et une estimation d'incertitude pour l'emplacement prédit des objets externes dynamiques ;

un cap prédit des objets externes dynamiques dans l'environnement environnant du véhicule distant et une estimation d'incertitude pour le cap prédit des objets externes dynamiques ;

un ensemble de paramètres d'état dynamique prédits des objets externes dynamiques dans l'environnement environnant du véhicule distant et une estimation d'incertitude pour chaque paramètre d'état dynamique prédit de l'ensemble de paramètres d'état dynamique prédits des objets externes dynamiques ; et

un ensemble de conditions environnementales dans l'environnement environnant du véhicule distant et une estimation d'incertitude pour chaque condition environnementale de l'ensemble de conditions environnementales dans l'environnement environnant du véhicule distant.

8. Procédé (S100) selon l'une quelconque des revendications 1 à 7, dans lequel l'ensemble de paramètres d'événement comprend au moins l'un parmi :

une perturbation d'un ou plusieurs paramètres de scène de l'ensemble de paramètres de scène, une estimation d'incertitude pour les un ou plusieurs paramètres de scène perturbés ; et

un ensemble de paramètres d'objet d'un objet externe non perçu, l'ensemble de paramètres d'objet incluant un emplacement de l'objet externe non perçu, un cap de l'objet externe non perçu, et une vitesse de l'objet externe non perçu.

9. Procédé (S100) selon l'une quelconque des revendications 1 à 8, comprenant en outre : la transmission (S108) du chemin déterminé pour exécution au véhicule distant.

10. Support de stockage lisible par ordinateur stockant un ou plusieurs programmes configurés pour être exécutés par un ou plusieurs processeurs d'un système de traitement, les un ou plusieurs programmes comprenant des instructions pour réaliser le procédé (S100) selon l'une quelconque des revendications précédentes.

11. Système de traitement (10) pour l'estimation d'une exposition au risque d'un véhicule distant (1) équipé d'un système de conduite automatisé (ADS), le système de traitement (10) comprenant une circuiterie de commande configurée pour :

obtenir des données d'entrée comprenant :

au moins un état candidat (21) du véhicule distant, dans lequel chaque état candidat comprend un ensemble de paramètres d'état candidat du véhicule distant,

au moins une scène prédite (22) de l'environnement environnant du véhicule distant à chaque état candidat (21), dans lequel chaque scène prédite (22) comprend un ensemble de paramètres de scène de l'environnement environnant du véhicule distant et une métrique de probabilité de scène de l'occurrence de la scène à un état candidat associé,

au moins un événement (23) pour chaque scène prédite, dans lequel chaque événement (23) comprend une métrique de probabilité d'événement de l'occurrence de l'événement dans la scène prédite (22) et un ensemble de paramètres d'événement de chaque événement ;

traiter les données d'entrée obtenues en utilisant un algorithme d'apprentissage automatique entraîné (31) configuré pour évaluer l'au moins un état candidat (21) par :

pour chaque état candidat (21) qui est associé à au moins un incident prédéfini se produisant avec une probabilité dépassant une fréquence d'occurrence admissible prédéfinie pour cet incident pendant un développement temporel prédit de chaque événement, la génération d'une sortie indiquant cet état candidat comme un état à haut risque pour le véhicule distant ; et

pour chaque état candidat (21) qui est associé à au moins un incident prédéfini se produisant avec une probabilité inférieure à la fréquence d'occurrence admissible prédéfinie pour cet incident pendant un développement temporel prédit de chaque événement, la génération d'une sortie indiquant cet état candidat comme un état à risque acceptable pour le véhicule distant ;

déterminer un chemin à réaliser par le véhicule distant (1) sur la base de l'au moins un état candidat évalué, dans lequel la détermination d'un chemin à réaliser par le véhicule distant comprend le rejet de tout chemin candidat comprenant un état candidat qui est déterminé comme un état à haut risque pour le véhicule.

**12.** Serveur distant comprenant le système de traitement (10) selon la revendication 11.

**13.** Environnement en nuage comprenant un ou plusieurs serveurs distants selon la revendication 12.

S100

**S101**
Obtain input data

**21**
Candidate states

**22**
Predicted scenes

**23**
Relevant events

**S102**
Processing the input data using first machine learning algorithm

**S104**
Determine high-risk states

**S105**
Determine acceptable-risk states

**S107**
Determine path for execution

**S115**
Transmit failure manifold

**S108**
Transmit path for execution to remote vehicle

Fig. 1

120

123

121

122

Acceptable-risk states

High-risk states

S100

**S101**
Obtain input data

**S110**
Determine candidate states

**210**
Candidate paths

**S111**
Determine predicted scenes per candidate state

**220**
Perceived scene

**S112**
Deduce relevant events

**S113**
Evaluate input data based on comparison with training data

Confidence in output > threshold

NO

**S114**
Store input data

YES

**S102**
Estimate failure manifold

**S104**
Determine high-risk states

**S105**
Determine acceptable-risk states

**S115**
Transmit failure manifold

**S107**
Determine path for execution

**S108**
Transmit path for execution to remote vehicle

Fig. 2

210a

123

210b

1

3

52

velocity

123

position

Fig. 3

2a    51a    2b    51b

1

Fig. 4a

3

52

## Fig. 4b

## Fig. 4c

## Fig. 4d

Fig. 5

Fig. 6

Fig. 7

Fig. 8

Fig. 9

EP 4 220 581 B1

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020346643 A1

- EP 20196794